(19) Europäisches Patentamt
European Patent Office
Office européen des brevets

(11) EP 3 552 821 B1

(12) EUROPEAN PATENT SPECIFICATION

(45) Date of publication and mention of the grant of the patent:
**11.01.2023 Bulletin 2023/02**

(21) Application number: **17878402.1**

(22) Date of filing: **02.11.2017**

(51) International Patent Classification (IPC):
***C08K 3/22*** *(2006.01)* ***C08J 7/043*** *(2020.01)*
***C08J 7/048*** *(2020.01)* ***C08K 3/34*** *(2006.01)*
***C08J 3/24*** *(2006.01)* ***B32B 9/00*** *(2006.01)*
***B32B 27/38*** *(2006.01)* ***B65D 65/40*** *(2006.01)*
***C08L 63/00*** *(2006.01)* ***C08J 7/04*** *(2020.01)*
***C08K 3/36*** *(2006.01)* ***C08K 7/00*** *(2006.01)*

(52) Cooperative Patent Classification (CPC):
**C08J 7/048; B32B 9/00; B32B 27/38; B65D 65/40; C08J 3/24; C08J 7/0423; C08J 7/043;**
C08J 2367/02; C08J 2463/00; C08K 3/346; C08K 3/36; C08K 7/00; C08K 2003/2227; C08L 63/00

(86) International application number:
**PCT/JP2017/039749**

(87) International publication number:
**WO 2018/105282 (14.06.2018 Gazette 2018/24)**

(54) **GAS BARRIER FILM**

GASBARRIERENFILM

FILM FORMANT BARRIÈRE CONTRE LES GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2016 JP 2016239335**

(43) Date of publication of application:
**16.10.2019 Bulletin 2019/42**

(73) Proprietor: **Mitsubishi Gas Chemical Company, Inc.**
**Tokyo 100-8324 (JP)**

(72) Inventor: **KOUNO, Kazuki**
**Hiratsuka-shi**
**Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 408 015**
**EP-A1- 2 842 982**
**JP-A- 2003 300 271**
**JP-A- 2004 026 880**
**JP-A- 2004 277 484**
**JP-A- 2009 101 684**
**JP-A- 2010 012 769**
**JP-A- 2012 076 291**
**JP-A- 2016 097 596**
**JP-Y1- S4 730 640**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

Technical Field

The present invention relates to a gas-barrier film.

Background Art

Packaging materials used for food products, pharmaceuticals, cosmetics, and precision electronic components, and the like require a high oxygen barrier property and water vapor barrier property in order to prevent deterioration of the contents.

Ordinarily, the oxygen barrier property of thermoplastic plastic films is not very high, and therefore, as means for imparting a gas-barrier property to such films, a method of forming various gas-barrier layers such as a polyvinylidene chloride (PVDC) layer and a polyvinyl alcohol (PVA) layer; and a method of vapor-depositing an inorganic substance such as alumina ($Al_2O_3$) or silica ($SiO_2$) have been examined.

A film including a PVDC layer as a gas-barrier layer is transparent and exhibits an excellent barrier property. However, when such films are incinerated as ordinary waste, organic matter such as acidic gas is generated, and therefore, from the viewpoint of environmental consideration, a transition to another material is desired. Films including a PVA layer exhibit an excellent gas-barrier property in low humidity conditions. However, its absorbency is high, and when the relative humidity is around 70% or higher, the gas-barrier property problematically deteriorates sharply.

A vapor-deposited inorganic film having an inorganic substance such as alumina or silica vapor deposited onto a thermoplastic plastic film is transparent, has an excellent gas-barrier property, and does not experience the problems described above. However, when a vapor-deposited inorganic film is bent, cracks are generated in the vapor-deposited inorganic layer, and the gas-barrier property significantly deteriorates, which is a problem.

As methods for improving the bending resistance of gas-barrier films or gas-barrier laminates including a vapor-deposited layer of an inorganic substance, methods of forming a layer made from a cured product of an epoxy resin composition including a prescribed epoxy resin and epoxy resin curing agent as main components have been proposed (Patent Documents 1 to 3).

Meanwhile, as epoxy resin compositions having a high gas-barrier property and adhesion, Patent Documents 4 and 5 propose epoxy resin compositions containing an epoxy curing agent, which is a reaction product of meta-xylylenediamine or para-xylylenediamine, and an unsaturated carboxylic acid of a prescribed structure and/or derivatives thereof.

Furthermore, as a gas-barrier coating film that does not require a long-term heating and drying treatment at a high temperature in order to eliminate stickiness of the coating film, that can be efficiently wound, and that exhibits an excellent productivity, Patent Document 6 proposes a gas-barrier coating film that contains: at least one layer selected from the group consisting of a flexible polymer film layer, a paper layer, and a metal foil layer; and at least one gas-barrier layer. The gas-barrier layer is a coating layer formed by curing an epoxy resin composition containing an epoxy resin, an epoxy resin curing agent, and fine particles, and the epoxy resin curing agent is a reaction product of meta-xylylenediamine or para-xylylenediamine, and an unsaturated carboxylic acid having a prescribed structure and/or a derivative thereof. An average particle size of the fine particles is in a range from 0.01 to 5 μm, and the content of the fine particles (based on the total mass of the epoxy resin and epoxy resin curing agent) is in a range from 0.01 to 5 mass%.

Patent Document 7 describes a laminate film which is formed by laminating at least (i) a substrate, (ii) a silica-deposition layer, alumina-deposition layer or silica-alumina-binary deposition layer, (iii) an adhesive layer and (iv) a sealant layer. The adhesive forming the adhesive layer includes an epoxy resin composition comprising an epoxy resin and an epoxy resin-curing agent as a main component. The curing agent is a reaction product of (a) m-xylylenediamine or p-xylylenediamine, (b) a polyfunctional compound which forms an amide group portion by reaction with polyamine, can form an oligomer and has at least one acyl group and (d) a functional compound which forms a carbamate portion by reaction with polyamine and has at least one carbonate portion; or a reaction product of the components (a), (b) and (d), and (c) a monovalent $C_{1-8}$ carboxylic acid and/or its derivative.

Citation List

Patent Literature

Patent Document 1: JP 2003-300271 A
Patent Document 2: JP 2005-28835 A

Patent Document 3: JP 2009-101684 A
Patent Document 4: WO 2013/161480
Patent Document 5: WO 2013/161481
Patent Document 6: JP 2016-97596 A
Patent Document 7: JP 2010-012769 A

Summary of Invention

Technical Problem

However, in recent years, gas-barrier films with an initial gas-barrier property and bending resistance that are even further improved compared to the past are desired.

In addition, gas-barrier films are attracting attention not only in the packaging material field mentioned above, but also in the field of optical films. For example, quantum dots (QD) employed in quantum dot displays; and organic electroluminescent (EL) elements provided in organic EL displays are easily degraded by moisture, and therefore the use of gas-barrier films as protective films for quantum dots and organic EL elements is also considered to be effective. Gas-barrier films to be used in these applications require a high water vapor barrier property. Furthermore, such films are also used as optical films in image display devices, and therefore such films preferably have a high level of transparency to avoid interfering with the image display performance.

An object of the present invention is to provide a gas barrier film and laminate that further improve the gas-barrier property of known gas-barrier films including a vapor-deposited inorganic layer; and that also are excellent in bending resistance.

Solution to Problem

The present inventors discovered that a gas-barrier film of a prescribed layered constitution having: a substrate film including a vapor-deposited inorganic layer; and a cured resin layer made from a cured product of a prescribed epoxy resin composition can resolve the issues to be addressed by the present invention.

The present invention relates to a gas-barrier film including: a substrate film including a vapor-deposited inorganic layer; and a cured resin layer;
the gas-barrier film including the cured resin layer on a surface of the vapor-deposited inorganic layer side of the substrate film; the cured resin layer being a cured product of an epoxy resin composition containing: an epoxy resin, an epoxy resin curing agent, and non-spherical inorganic particles, wherein the non-spherical inorganic particles are plate-shaped, scale-shaped, column-shaped, chain-shaped or fibrous inorganic particles, and the content of the non-spherical inorganic particles in the epoxy resin composition is from 3.0 to 7.0 parts by mass per 100 parts by mass of a total amount of the epoxy resin and the epoxy resin curing agent; and the epoxy resin curing agent being a reaction product of the following components (A) and (B):

(A) at least one selected from the group consisting of meta-xylylenediamine and para-xylylenediamine;
(B) at least one selected from the group consisting of unsaturated carboxylic acids represented by the following general formula (1) and derivatives thereof,

[Chemical Formula 1]

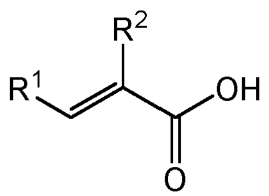

(1)

where $R^1$ and $R^2$ each independently represent a hydrogen atom, an alkyl group having from 1 to 8 carbons, an aryl group having from 6 to 12 carbons, or an aralkyl group having from 7 to 13 carbons.

In addition, the present invention relates to a laminate including the gas-barrier film and a thermoplastic resin layer.

Further embodiments of the gas-barrier film and laminate of the present invention are described below and in the appended claims.

## Advantageous Effects of Invention

The gas-barrier film and laminate of the present invention are excellent in a gas-barrier property and bending resistance and are therefore suitable for packaging material applications. Furthermore, gas-barrier films and laminates with a particularly high water vapor barrier property and transparency are suited, for example, as optical films for image display devices such as protective films for quantum dots in a quantum dot display; and protective films for organic EL elements in organic EL displays.

## Brief Description of Drawings

FIG. 1 is a cross-sectional schematic view illustrating one embodiment of a gas-barrier film of the present invention.
FIG. 2 is a cross-sectional schematic view illustrating one embodiment of a laminate of the present invention.

## Description of Embodiments

### Gas-barrier film

A gas-barrier film of the present invention has: a substrate film having a vapor-deposited inorganic layer (hereinafter, also referred to merely as a "substrate film"); and a cured resin layer. The gas-barrier film has the cured resin layer on a surface of the vapor-deposited inorganic layer side of the substrate film; the cured resin layer is a cured product of an epoxy resin composition containing: an epoxy resin, an epoxy resin curing agent, and non-spherical inorganic particles, wherein the non-spherical inorganic particles are plate-shaped, scale-shaped, column-shaped, chain-shaped or fibrous inorganic particles, and the content of the non-spherical inorganic particles in the epoxy resin composition is from 3.0 to 7.0 parts by mass per 100 parts by mass of a total amount of the epoxy resin and the epoxy resin curing agent; and the epoxy resin curing agent is a reaction product of the following components (A) and (B):

(A) at least one selected from the group consisting of meta-xylylenediamine and para-xylylenediamine;
(B) at least one selected from the group consisting of unsaturated carboxylic acids represented by the following general formula (1) and derivatives thereof,

[Chemical Formula 2]

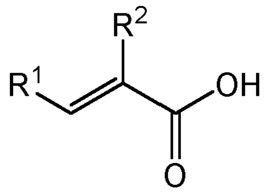

(1)

where $R^1$ and $R^2$ each independently represent a hydrogen atom, an alkyl group having from 1 to 8 carbons, an aryl group having from 6 to 12 carbons, or an aralkyl group having from 7 to 13 carbons.

The gas-barrier film of the present invention has the constitution described above, and therefore is a film that exhibits a high gas-barrier property and is excellent in bending resistance even though having a vapor-deposited inorganic layer. The gas-barrier film may be any film as long as it has the substrate film and at least one layer of the cured resin layer. The materials that constitutes the gas-barrier film of the present invention are described below.

### Substrate film

The substrate film constituting the gas-barrier film of the present invention is a film including a base film and at least one vapor-deposited inorganic layer. The substrate film may be any film as long as it has a vapor-deposited inorganic layer on at least one surface, but from the viewpoints of productivity and bending resistance of the gas-barrier film, the substrate film preferably has the vapor-deposited inorganic layer on one surface only.

Base film

A transparent plastic film is preferable as the base film constituting the substrate film. Examples include polyolefin-based films such as low density polyethylene, high density polyethylene, linear low density polyethylene, and polypropylene; polyester-based films such as polyethylene terephthalate, polyethylene naphthalate, and polybutylene terephthalate; polyamide-based films such as nylon 6, nylon 6,6, poly-meta-xylene adipamide (N-MXD6); polyimide-based films; biodegradable films such as polylactic acid; polyacrylonitrile-based films; poly(meth)acrylic-based films; polystyrene films; polycarbonate-based films; ethylene-vinyl acetate copolymer saponified material (EVOH)-based films; and polyvinyl alcohol-based films. Of these, from the viewpoints of transparency, strength and heat resistance, a film selected from the group consisting of polyolefin-based films, polyester-based films, polyamide-based films, and polyimide-based films is preferable as the base film, a polyester-based film is more preferable, and a polyethylene terephthalate (PET) film is even more preferable.

The films may be stretched in a uniaxial or biaxial direction.

Vapor-deposited inorganic layer

The vapor-deposited inorganic layer is equipped in order to provide a gas-barrier property to the gas-barrier film. The vapor-deposited inorganic layer can manifest a high gas-barrier property even when the thickness is thin, and the vapor-deposited inorganic layer is also excellent in transparency.

The inorganic substance constituting the vapor-deposited inorganic layer is not particularly limited as long as it is an inorganic substance that can form a thin film with a gas-barrier property on the base film through a vapor deposition method. Examples include silicon, aluminum, magnesium, calcium, zinc, tin, nickel, titanium, zirconium, and carbon; or oxides, carbides, nitrides, and oxynitrides thereof. Of these, from the viewpoint of the gas-barrier property, at least one selected from the group consisting of silicon oxides and aluminum oxides is preferable, and silicon oxides are more preferable. One type of the inorganic substances may be used alone, or a combination of two or more types may be used.

The thickness of the vapor-deposited inorganic layer is preferably 5 nm or more from the viewpoint of achieving a high gas-barrier property. Furthermore, from the viewpoints of transparency and bending resistance, the thickness is preferably 100 nm or less and more preferably 50 nm or less. The thickness described above is the thickness per one layer of the vapor-deposited inorganic layer.

The method for forming the vapor-deposited inorganic layer is not particularly limited, and examples include known methods, for example, a physical vapor growth method such as a vacuum vapor deposition method, a sputtering method, or an ion plating method; or a chemical vapor phase growth method such as a plasma chemical vapor phase growth method, a thermochemical vapor phase growth method, or a photochemical vapor phase growth method.

From the viewpoints of the gas-barrier property and strength, the thickness of the substrate film including the base film and at least one vapor-deposited inorganic layer is preferably from 5 to 300 μm, more preferably from 5 to 100 μm, even more preferably from 8 to 50 μm, and yet even more preferably from 10 to 40 μm.

Cured resin layer

The cured resin layer of the gas-barrier film of the present invention is a cured product of an epoxy resin composition containing: an epoxy resin, an epoxy resin curing agent, and non-spherical inorganic particles; and the epoxy resin curing agent is a reaction product of the following components (A) and (B):

(A) at least one selected from the group consisting of meta-xylylenediamine and para-xylylenediamine;
(B) at least one selected from the group consisting of unsaturated carboxylic acids represented by the following general formula (1) and derivatives thereof,

[Chemical Formula 3]

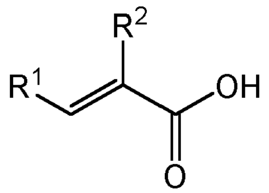

(1)

where $R^1$ and $R^2$ each independently represent a hydrogen atom, an alkyl group having from 1 to 8 carbons, an aryl group having from 6 to 12 carbons, or an aralkyl group having from 7 to 13 carbons.

The gas-barrier film of the present invention includes a cured resin layer, which is a cured product of the prescribed epoxy resin composition on a surface of the vapor-deposited inorganic layer side of the substrate film. Furthermore, when the cured resin layer contains non-spherical inorganic particles, the initial gas-barrier property and bending resistance are dramatically improved compared to that of known gas-barrier films including a vapor-deposited inorganic layer. The reason for the improvement in the gas-barrier property has not yet been definitively identified but is surmised to be as follows.

When an epoxy resin composition that contains non-spherical inorganic particles is coated onto a surface of the vapor-deposited inorganic layer side of the substrate film, the non-spherical inorganic particles can be embedded into the unevenness and minute gaps in the surface of the vapor-deposited inorganic layer. It is thought that the cured resin layer that is cured in this state dramatically improves the gas-barrier property. This effect of gas-barrier property improvement results in a dramatically higher value than a value obtained by summing the respective gas-barrier properties of the cured resin layer and substrate film having the vapor-deposited inorganic layer. A film having the cured resin layer on the surface of the substrate film that is opposite the vapor-deposited inorganic layer side is less likely to exhibit an effect of gas-barrier property improvement in comparison to the gas-barrier film having the constitution of the present invention.

In the present specification, the term "non-spherical" means a three-dimensional shape other than spherical (substantially a true spherical shape), and in the present invention, inorganic particles having a plate shape, scale shape, column shape, chain shape, or fibrous shape are used as non-spherical inorganic particles.

Moreover, when the prescribed cured resin layer is provided on the surface of the vapor-deposited inorganic layer side of the substrate film, the bending resistance improvement effect is excellent, and a high gas-barrier property can be maintained even after bending tests. Ordinarily, when a cured resin layer contains hard particles such as non-spherical inorganic particles, a decrease in the bending resistance of the gas-barrier film may be anticipated, but contrary to such expectations, the present inventors discovered that an effect of improving the bending resistance of the film is obtained.

The components included in the epoxy resin composition for forming the cured resin layer are described below.

Epoxy resin

The epoxy resin may be any of a saturated or unsaturated aliphatic compound, alicyclic compound, aromatic compound, or heterocyclic compound, and in a case where consideration is given to manifesting a high gas-barrier property, an epoxy resin containing an aromatic ring or alicyclic structure in the molecule is preferable.

Specific examples of the epoxy resin include at least one resin selected from an epoxy resin having a glycidylamino group and derived from meta-xylylenediamine, an epoxy resin having a glycidylamino group and derived from para-xylylenediamine, an epoxy resin having a glycidylamino group and derived from 1,3-bis(aminomethyl)cyclohexane, an epoxy resin having a glycidylamino group and derived from 1,4-bis(aminomethyl)cyclohexane, an epoxy resin having a glycidylamino group and derived from diaminodiphenyl methane, an epoxy resin having a glycidylamino group and/or glycidyloxy group and derived from para-aminophenol, an epoxy resin having a glycidyloxy group and derived from bisphenol A, an epoxy resin having a glycidyloxy group and derived from bisphenol F, an epoxy resin having a glycidyloxy group and derived from phenol novolac, and an epoxy resin having a glycidyloxy group and derived from resorcinol. Two or more of the epoxy resins described above may also be mixed at an appropriate ratio and used in order to improve various performances such as flexibility, impact resistance, and moist heat resistance.

Of the resins described above, from the viewpoint of improving the gas-barrier property and bending resistance, the epoxy resin is preferably one having, as a main component, at least one selected from the group consisting of an epoxy resin having a glycidylamino group and derived from meta-xylylenediamine, an epoxy resin having a glycidylamino group and derived from para-xylylenediamine, and an epoxy resin having a glycidyloxy group and derived from bisphenol F, and the epoxy resin is more preferably one having, as a main component, an epoxy having a glycidylamino group and derived from meta-xylylenediamine.

Note that in the present specification, the term "main component" means that other components may be included and also means a component that is included in an amount of preferably from 50 to 100 mass%, more preferably from 70 to 100 mass%, and even more preferably from 90 to 100 mass% relative to the total amount.

The epoxy resin is obtained by a reaction of various alcohols, phenols, and amines, with an epihalohydrin. For example, an epoxy resin having a glycidylamino group and derived from meta-xylylenediamine is obtained by reaction of adding epichlorohydrin to meta-xylylenediamine. Meta-xylylenediamine has four amino hydrogens, and therefore mono-, di-, tri- and tetraglycidyl compounds are produced. The number of glycidyl groups can be changed by changing the reaction ratio between the meta-xylylenediamine and the epichlorohydrin. For example, an epoxy resin having primarily four glycidyl groups is obtained by carrying out an addition reaction of approximately four-fold moles of epichlorohydrin to meta-xylylenediamine.

The epoxy resin is synthesized by reacting an epihalohydrin with various alcohols, phenols, and amines in the

presence of an alkali such as sodium hydroxide and then by separating the alkali halide that is produced, at a temperature from 20 to 140°C, preferably at a temperature from 50 to 120°C in the case of alcohols and phenols, and preferably at a temperature from 20 to 70°C in the case of amines. For a case in which an epoxy resin primarily having four glycidyl groups is produced, an excess amount of the epihalohydrin is used with respect to the various alcohols, phenols, and amines.

The number average molecular weight of the epoxy resin that is produced differs depending on the molar ratio of the epihalohydrin to the various alcohols, phenols, and amines but is preferably from 100 to 4000, more preferably from 200 to 1000, and even more preferably from 200 to 500.

Epoxy resin curing agent

The epoxy resin curing agent is a reaction product of the following components (A) and (B):

(A) at least one selected from the group consisting of meta-xylylenediamine and para-xylylenediamine;

(B) at least one selected from the group consisting of unsaturated carboxylic acids represented by the following general formula (1) and derivatives thereof,

[Chemical Formula 4]

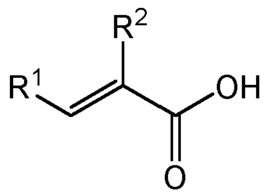

(1)

where $R^1$ and $R^2$ each independently represent a hydrogen atom, an alkyl group having from 1 to 8 carbons, an aryl group having from 6 to 12 carbons, or an aralkyl group having from 7 to 13 carbons.

A cured product (cured resin layer) of an epoxy resin composition that includes the curing agent is excellent in the gas-barrier property.

The component (A) is used from the viewpoint of the gas-barrier property, and meta-xylylenediamine is preferable in terms of the gas-barrier property. One kind of the component (A) may be used alone, or a combination of two or more kinds may be mixed and used.

The component (B) is at least one selected from the group consisting of unsaturated carboxylic acid represented by the general formula (1) and derivatives thereof, and from the viewpoint of the gas-barrier property, in the formula (1), $R^1$ is preferably a hydrogen atom or an alkyl group having from 1 to 8 carbons, more preferably a hydrogen atom or an alkyl group having from 1 to 3 carbons, even more preferably a hydrogen atom or a methyl group, and yet even more preferably a hydrogen atom.

Moreover, from the viewpoint of the gas-barrier property, in the formula (1), $R^2$ is preferably a hydrogen atom or an alkyl group having from 1 to 8 carbons, more preferably a hydrogen atom or an alkyl group having from 1 to 3 carbons, even more preferably a hydrogen atom or a methyl group, and yet even more preferably a hydrogen atom.

Examples of derivatives of the unsaturated carboxylic acid represented by the general formula (1) include esters, amides, acid anhydrides, and acid chlorides of the unsaturated carboxylic acid. As esters of the unsaturated carboxylic acid, alkyl esters are preferable, and from the viewpoint of achieving an excellent reactivity, the number of carbons of the alkyl is preferably from 1 to 6, more preferably from 1 to 3, and even more preferably from 1 to 2.

Examples of the unsaturated carboxylic acid represented by the general formula (1) and derivatives thereof include unsaturated carboxylic acid such as acrylic acid, methacrylic acid, α-ethylacrlyic acid, α-propylacrylic acid, α-isopropylacrylic acid, α-n-butylacrylic acid, α-t-butylacrylic acid, α-pentylacrylic acid, α-phenylacrylic acid, α-benzylacrylic acid, crotonic acid, 2-pentenoic acid, 2-hexenoic acid, 4-methyl-2-pentenoic acid, 2-heptenoic acid, 4-methyl-2-hexenoic acid, 5-methyl-2-hexenoic acid, 4,4-dimethyl-2-pentenoic acid, 4-phenyl-2-butenoic acid, cinnamic acid, o-methyl cinnamic acid, m-methyl cinnamic acid, p-methyl cinnamic acid, and 2-octenoic acid; and esters, amides, acid anhydrides, and acid chlorides thereof.

Of the above, from the viewpoint of achieving a good gas-barrier property, the component (B) is preferably at least one selected from the group consisting of acrylic acid, methacrylic acid, crotonic acid, and derivatives thereof, is more preferably at least one selected from the group consisting of acrylic acid, methacrylic acid, crotonic acid and alkyl esters thereof, is even more preferably at least one selected from the group consisting of acrylic acid, methacrylic acid and alkyl esters thereof, is yet even more preferably an alkyl ester of acrylic acid, and is yet even more preferably methyl

acrylate.

One kind of the component (B) may be used alone, or a combination of two or more kinds may be used.

In a case where a carboxylic acid, an ester, or an amide is used as the component (B), the reaction of the component (A) and the component (B) is performed, under a condition of preferably 0 to 100°C and more preferably 0 to 70°C, by mixing the components (A) and (B); and under a condition of 100 to 300°C and preferably 130 to 250°C, by performing a Michael addition reaction and an amide group forming reaction through dehydration, de-alcoholization, and deamination.

In this case, when the amide group forming reaction is performed, the interior of the reaction apparatus can be under a reduced pressure in the final stage of the reaction as necessary in order to complete the reaction. Furthermore, a non-reactive solvent can be used for dilution as necessary. A catalyst such as phosphites can be also be added as a dehydrating agent or de-alcoholization agent.

Meanwhile, in a case where an acid anhydride or acid chloride of unsaturated carboxylic acid is used as the component (B), the reaction between the component (A) and the component (B) is performed by mixing, under a condition of 0 to 150°C or preferably 0 to 100°C; and then by performing a Michael addition reaction and an amide group forming reaction. In this case, when the amide group forming reaction is performed, the interior of the reaction apparatus can be under a reduced pressure in the final stage of the reaction as necessary in order to complete the reaction. Furthermore, a non-reactive solvent can be used for dilution as necessary. A tertiary amine such as pyridine, picoline, lutidine, and a trialkyl amine can also be added.

The amide group site introduced by the reaction between the component (A) and the component (B) exhibits a high cohesive force, and therefore the cured resin layer formed using the epoxy resin curing agent that is the reaction product of the components (A) and (B) has a high gas-barrier property and excellent adhesion.

The reaction molar ratio [(B)/(A)] of the component (B) to the component (A) is preferably in a range from 0.3 to 1.0. When the reaction molar ratio is 0.3 or more, a sufficient amount of amide groups is produced in the epoxy resin curing agent, and high gas-barrier property and adhesion are manifest. On the other hand, when the reaction molar ratio is in a range of 1.0 or less, the amount of amino groups necessary for a below-described reaction with an epoxy group in the epoxy resin is sufficient, resulting in an excellent heat resistance and excellent solubility in an organic solvent and water.

When consideration is given particularly to the high gas-barrier property and excellent coating film performance of the epoxy cured resin product that is to be obtained, the molar ratio [(B)/(A)] of the component (B) to the component (A) is more preferably in a range from 0.6 to 1.0.

The epoxy resin curing agent may also be a reaction product of the components (A), (B), and at least one compound selected from the group consisting of the following components (C), (D) and (E):

(C) at least one selected from the group consisting of monovalent carboxylic acids represented by $R^3$-COOH and derivatives thereof, where $R^3$ represents a hydrogen atom, an alkyl group having from 1 to 7 carbons which may have a hydroxyl group, or an aryl group having from 6 to 12 carbons;
(D) a cyclic carbonate; and
(E) a monoepoxy compound having from 2 to 20 carbons.

The monovalent carboxylic acid represented by $R^3$-COOH and a derivative thereof, which is the component (C), is used as necessary, from the viewpoints of reducing the reactivity between the epoxy resin curing agent and the epoxy resin and of improving workability.

$R^3$ represents a hydrogen atom, an alkyl group having from 1 to 7 carbons which may have a hydroxyl group, or an aryl group having from 6 to 12 carbons, and $R^3$ is preferably an alkyl group having from 1 to 3 carbons or a phenyl group.

Examples of derivatives of the monovalent carboxylic acid represented by $R^3$-COOH include esters, amides, acid anhydrides, and acid chlorides of the carboxylic acid. As esters of the carboxylic acid, alkyl esters are preferable, and the number of carbons of the alkyl is preferably from 1 to 6, more preferably from 1 to 3, and even more preferably from 1 to 2.

Examples of the component (C) include monovalent carboxylic acids such as formic acid, acetic acid, propionic acid, butyric acid, lactic acid, glycolic acid, and benzoic acid, and derivatives thereof.

For the component (C), one kind may be used alone, or a combination of two or more kinds may be used.

The cyclic carbonate of the component (D) is used as necessary, from the viewpoints of reducing the reactivity between the epoxy resin curing agent and the epoxy resin and of improving workability, and is preferably a cyclic carbonate of a six-membered ring or less from the viewpoint of reactivity with the component (A). Examples include ethylene carbonate, propylene carbonate, glycerin carbonate, 1,2-butylene carbonate, vinylene carbonate, 4-vinyl-1,3-dioxolan-2-one, 4-methoxymethyl-1,3-dioxolan-2-one, and 1,3-dioxan-2-one. Of these, from the viewpoint of the gas-barrier property, at least one selected from the group consisting of ethylene carbonate, propylene carbonate, and glycerin

carbonate is preferable.

For the component (D), one kind may be used alone, or a combination of two or more kinds may be used.

The monoepoxy compound, which is the component (E), is a monoepoxy compound having from 2 to 20 carbons, and is used as necessary, from the viewpoints of reducing the reactivity between the epoxy resin curing agent and the epoxy resin and of improving workability. From the viewpoint of the gas-barrier property, the component (E) is preferably a monoepoxy compound having from 2 to 10 carbons and is more preferably a compound represented by the following formula (2).

[Chemical Formula 5]

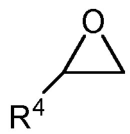

(2)

where $R^4$ represents a hydrogen atom, an alkyl group having from 1 to 8 carbons, an aryl group, or $R^5$-O-$CH_2$-, and $R^5$ represents a phenyl group or a benzyl group.

Examples of the monoepoxy compound represented by the formula (2) include ethylene oxide, propylene oxide, 1,2-butylene oxide, styrene oxide, phenylglycidyl ether, and benzylglycidyl ether. For the component (E), one kind may be used alone, or a combination of two or more kinds may be used.

For a case in which the component (C), (D), or (E) is used in the epoxy resin curing agent, any one type of compound selected from the group consisting of the components (C), (D), and (E) may be used alone, or a combination of two or more kinds may be used.

Note that the epoxy resin curing agent may be a reaction product that is obtained by reacting, in addition to the components (A) to (E), another component within a scope that does not hinder the effect of the present invention. Examples of the other component referred to here include aromatic dicarboxylic acids or derivatives thereof.

However, the usage amount of the "other component" is preferably 30 mass% or less, more preferably 10 mass% or less, and even more preferably 5 mass% or less of the total amount of the reaction components constituting the epoxy resin curing agent.

The reaction product of the components (A), (B), and the at least one compound selected from the group consisting of the components (C), (D), and (E) is obtained by making at least one compound selected from the group consisting of the components (C), (D), and (E) in combination with the component (B) react with the component (A), which is a polyamine. The reaction may be performed by adding the components (B) to (E) in any order and then making the mixture react with the component (A), or by mixing the components (B) to (E) and then making the mixture react with the component (A).

The reaction between the component (A) and the component (C) can be performed with the same conditions as those of the reaction between the component (A) and the component (B). In a case where the component (C) is used, the components (B) and (C) may be mixed and then reacted with the component (A), or the components (A) and (B) may be primarily reacted and further be reacted with the component (C).

In a case where the component (D) and/or the component (E) is used, preferably, the components (A) and (B) are primarily reacted, following the component (D) and/or the component (E) are/is reacted.

The reaction of the component (A) and the component (D) and/or the component (E) is performed by mixing the component (A) and the component (D) and/or the component (E) under a condition of 25 to 200°C, and by performing an addition reaction under a condition of 30 to 180°C and preferably from 40 to 170°C. Furthermore, as necessary, a catalyst such as sodium methoxide, sodium ethoxide, and potassium t-butoxide can be used.

At the time of the reaction, as necessary, the component (D) and/or the component (E) may be melted or diluted with a non-reactive solvent and used in order to facilitate the reaction.

Even for a case in which the epoxy resin curing agent is a reaction product of the components (A), (B), and at least one compound selected from the group consisting of the components (C), (D), and (E), the reaction molar ratio [(B)/(A)] of the component (B) to the component (A) is, for the same reason as described above, preferably in a range from 0.3 to 1.0 and more preferably in a range from 0.6 to 1.0. Meanwhile, the reaction molar ratio [{(C) + (D) + (E)}/(A)] of the components (C), (D), and (E) to the component (A) is preferably in a range from 0.05 to 3.1, more preferably in a range from 0.07 to 2.5, and even more preferably in a range from 0.1 to 2.0.

However, from the viewpoints of the gas-barrier property and coating performance, the reaction molar ratio [{(B) + (C) + (D) + (E)}/(A)] of the components (B) to (E) to the component (A) is preferably in a range from 0.35 to 2.5 and more preferably in a range from 0.35 to 2.0.

Non-spherical inorganic particles

Non-spherical inorganic particles are used to improve the gas-barrier property and bending resistance of the gas-barrier film including a vapor-deposited inorganic layer and a cured resin layer. The shape of the non-spherical particles is a plate shape, scale shape, column shape, chain shape, or fibrous shape. Plate-shaped and scale-shaped inorganic particles may be formed in a layer shape by laminating a plurality of such particles. Among them, from the viewpoint of improving the gas-barrier property and bending resistance, plate-shaped, scale-shaped, column-shaped, or chain-shaped inorganic particles are preferable, plate-shaped, scale-shaped, or column-shaped inorganic particles are more preferable, and plate-shaped or scale-shaped inorganic particles are even more preferable.

Examples of the inorganic substance constituting the non-spherical inorganic particles include silica, alumina, mica, talc, aluminum, bentonite, and smectite. Among them, from the viewpoint of improving the gas-barrier property and bending resistance, at least one selected from the group consisting of silica, alumina, and mica is preferable, at least one selected from the group consisting of silica and alumina is more preferable, and silica is even more preferable.

The non-spherical inorganic particles may be surface treated as necessary for the purpose of increasing dispersibility in the epoxy resin composition and of improving the transparency of the obtained cured resin layer and gas-barrier film. Of these, the non-spherical inorganic particles are preferably coated with an organic material, and from the viewpoint of improving the gas-barrier property, bending resistance, and transparency, the non-spherical inorganic particles are more preferably at least one selected from the group consisting of silica and alumina coated with an organic material. From the viewpoints of the gas-barrier property and bending resistance, silica coated with an organic material is more preferable, and from the viewpoint of transparency, alumina coated with an organic material is more preferable.

The average particle size of the non-spherical inorganic particles is preferably in a range from 1 to 2000 nm, more preferably from 1 to 1500 nm, even more preferably from 1 to 1000 nm, yet even more preferably from 1 to 800 nm, yet even more preferably from 1 to 500 nm, yet even more preferably from 5 to 300 nm, yet even more preferably from 5 to 200 nm, yet even more preferably from 5 to 100 nm, and yet even more preferably from 8 to 70 nm. When the average particle size is 1 nm or more, the inorganic particles are easily prepared, and when the average particle size is 2000 nm or less, the gas-barrier property, bending resistance, and transparency are all improved. Note that the average particle size is the average particle size of the primary particles.

In a case where the non-spherical inorganic particles are plate-shaped, scale-shaped, column-shaped, or fibrous, an aspect ratio of the non-spherical inorganic particles is preferably from 2 to 700 and more preferably from 3 to 500. When the aspect ratio thereof is 2 or more, a good gas-barrier property is easily manifested. The average particle size and aspect ratio of the non-spherical inorganic particles are determined, for example, by observing the particles using a scanning electron microscope (SEM) or a transmission electron microscope (TEM) and by obtaining the average of measurements at three or more places. Note that the average particle size and aspect ratio of non-spherical inorganic particles present in the cured resin layer can be determined, for example, by embedding the gas-barrier film in the epoxy resin, subsequently by using an ion milling device to ion mill a film cross-section and prepare a sample for cross-sectional observations, and then by observing and measuring the cross-section of the cured resin layer portion of the obtained sample by the same method as described above.

In a case where the average particle size of the non-spherical inorganic particles is less than 100 nm, and measurement of the average particle size determined by the method described above is difficult, the average particle size can also be measured, for example, by the BET method.

The method for producing the non-spherical inorganic particles is not particularly limited, and a known method can be used.

From the viewpoint of ease of preparation of the non-spherical inorganic particles and the viewpoint of blending and dispersibility in the epoxy resin composition, in the present invention, it is preferable that a dispersion liquid of the non-spherical inorganic particles is prepared, and then the dispersion liquid is blended into the epoxy resin composition. The dispersion medium of the dispersion liquid of the non-spherical inorganic particles is not particularly limited, and water or an organic solvent can be used. As the organic solvent, a polar solvent is preferable from the viewpoint of dispersibility of the non-spherical inorganic particles, and examples include protic polar solvents such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol; and aprotic polar solvents such as N,N-dimethylformamide, N,N-dimethylacetamide, dimethylsulfoxide, and N-methylpyrrolidone.

From the viewpoint of dispersibility of the non-spherical inorganic particles, the dispersion medium is preferably at least one selected from the group consisting of water and protic polar solvents. From the viewpoint of dispersibility of the particles and the viewpoint of miscibility between the dispersion liquid and the epoxy resin composition, a protic polar solvent is more preferable, and at least one selected from the group consisting of methanol, ethanol, 1-propanol, and 2-propanol is even more preferable.

Epoxy resin composition blending and preparation

The blending ratio of the epoxy resin and the epoxy resin curing agent in the epoxy resin composition may be within the standard blending range that is ordinarily used for a case in which an epoxy resin reaction product is produced through a reaction between an epoxy resin and an epoxy resin curing agent. More specifically, the ratio of the number of active amine hydrogens in the epoxy resin curing agent to the number of epoxy groups in the epoxy resin ((number of active amine hydrogens in the epoxy resin curing agent)/(number of epoxy groups in the epoxy resin)) is preferably in a range from 0.2 to 12.0. The ratio thereof is more preferably in a range from 0.4 to 10.0 and even more preferably in a range from 0.6 to 8.0. Note that for a case in which a thermoplastic resin layer is further laminated to the gas-barrier film of the present invention including the substrate film and the cured resin layer to therefore form a laminate described below, a larger value of the ratio of the ((number of active amine hydrogens in the epoxy resin curing agent)/(number of epoxy groups in the epoxy resin)) described above is preferable because interlayer adhesion between the cured resin layer and a layer adjacent thereto becomes favorable. From this viewpoint, the ratio of the ((number of active amine hydrogens in the epoxy resin curing agent)/(number of epoxy groups in the epoxy resin)) in the epoxy resin composition is preferably 2.0 or more and more preferably 3.5 or more.

The content of the non-spherical inorganic particles in the epoxy resin composition is from 3.0 to 7.0 parts by mass, per 100 parts by mass of the total amount of the epoxy resin and the epoxy resin curing agent. When the content of the non-spherical inorganic particles in the epoxy resin composition is 3.0 parts by mass or more per 100 parts by mass of the total amount of the epoxy resin and the epoxy resin curing agent, the effect of improving the gas-barrier property and bending resistance of the obtained gas-barrier film using the particles is favorable. Moreover, when the content thereof is 7.0 parts by mass or less, the transparency of the obtained gas-barrier film is favorable.

From the viewpoint of obtaining the effect of the present invention, the total content of the epoxy resin, the epoxy resin curing agent, and the non-spherical inorganic particles in the solid content of the epoxy resin composition is preferably 60 mass% or more, more preferably 70 mass% or more, even more preferably 80 mass% or more, and yet even more preferably 85 mass% or more, and the upper limit is 100 mass%. The "solid content of the epoxy resin composition" means the components excluding water and the organic solvent in the epoxy resin composition.

A non-reactive solvent is preferable as the organic solvent that is used in the epoxy resin composition. As specific examples thereof, ethyl acetate, butyl acetate, methyl isobutyl ketone, and toluene can be used in addition to the polar solvents given as examples of the dispersion medium used in the dispersion liquid of the non-spherical inorganic particles.

As necessary, additives such as a thermosetting resin, a wetting agent, a tackifier, a coupling agent, a defoaming agent, a curing accelerator, a rust prevention additive, a pigment, and an oxygen scavenger may be blended into the epoxy resin composition within a scope that does not impair the effect of the present invention. The total content of these additives in the epoxy resin composition is preferably 20.0 parts by mass or less and more preferably from 0.001 to 15.0 parts by mass, per 100 parts by mass of the total amount of the epoxy resin and epoxy resin curing agent.

The epoxy resin composition can be prepared, for example, by blending prescribed amounts of each of the epoxy resin, epoxy resin curing agent, dispersion liquid of the non-spherical inorganic particles, additives that are used as necessary, and the solvent and then by stirring and mixing using a known method and equipment. The order in which each component is mixed is not particularly limited, but in order to achieve a favorable dispersibility of the non-spherical inorganic particles in the epoxy resin composition, preferably, first the dispersion liquid of the non-spherical inorganic particles and the solvent component are mixed, subsequently the epoxy resin curing agent or solution thereof; and the epoxy resin are added and mixed in that order. Such a method is preferable because the dispersibility of the non-spherical inorganic particles can be maintained in a favorable state by gradually increasing the solid content concentration in the liquid in which the non-spherical inorganic particles are included from a low concentration state.

The cured resin layer of the gas-barrier film of the present invention is a cured product of the epoxy resin composition. The method for curing the epoxy resin composition is not particularly limited, and curing is performed by a known method at a temperature and concentration of the epoxy resin composition sufficient for obtaining the cured product thereof. The curing temperature can be selected, for example, in a range from 10 to 140°C.

From the viewpoints of the gas-barrier property and bending resistance, the thickness of the cured resin layer is preferably 0.1 μm or more, more preferably 0.2 μm or more, even more preferably 0.5 μm or more, and even more preferably 1.0 μm or more. Furthermore, from the viewpoint of the transparency of the gas-barrier film, the thickness of the cured resin layer is preferably 20 μm or less, more preferably 10 μm or less, even more preferably 8.0 μm or less, even more preferably 5.0 μm or less, and yet even more preferably 3.5 μm or less. The thickness described above is the thickness per one layer of the cured resin layer.

The oxygen permeation coefficient of the cured resin layer by itself at a temperature of 23°C and a relative humidity of 60% is preferably 1.0 cc·mm/$m^2$·day·atm or less, more preferably 0.5 cc·mm/$m^2$·day·atm or less, even more preferably 0.3 cc·mm/$m^2$·day·atm or less, and yet even more preferably 0.1 cc·mm/$m^2$·day·atm or less. The oxygen permeation coefficient of the cured resin layer is determined specifically by a method described in the examples.

Layer constitution of gas-barrier film

The gas-barrier film of the present invention may be constituted to include the substrate film including a vapor-deposited inorganic layer and at least one layer of the cured resin layer and may be constituted such that the cured resin layer is provided on the surface of the vapor-deposited inorganic layer side of the substrate film. From the viewpoint of obtaining the effect of the present invention, the gas-barrier film of the present invention is preferably constituted such that the substrate film includes the vapor-deposited inorganic layer on only one surface, and the gas-barrier film includes only one layer of the cured resin layer. Moreover, the vapor-deposited inorganic layer and the cured resin layer are preferably adjacent to each other.

An example of a preferable layer constitution of the gas-barrier film includes the constitution illustrated in FIG. 1. FIG. 1 is a cross-sectional schematic view illustrating one embodiment of the gas-barrier film of the present invention. A gas-barrier film 100 includes: a substrate film 1 including a vapor-deposited inorganic layer 12 on one surface, and a cured resin layer 2 provided on the surface of the vapor-deposited inorganic layer 12 side of the substrate film 1. The substrate film 1 includes the vapor-deposited inorganic layer 12 formed on one surface of a base film 11. In FIG. 1, the vapor-deposited inorganic layer 12 and the cured resin layer 2 are adjacent to each other. Also, as illustrated in FIG. 1, the gas-barrier film of the present invention preferably does not include a film other than the substrate film.

However, the gas-barrier film of the present invention is not limited to the layer constitution of FIG. 1 and, for example, may include two or more layers of the cured resin layer. Furthermore, for example, the gas-barrier film of FIG. 1 may be constituted to include, a primer layer, a protective layer, or the like between the substrate film 1 and the cured resin layer 2; or at the top surface side (surface not adjacent to the substrate film 1) of the cured resin layer 2.

Method for manufacturing gas-barrier film

The method for manufacturing the gas-barrier film of the present invention is not particularly limited, and a known method can be used. For example, as a method for manufacturing the gas-barrier film of the constitution of FIG. 1, a method may be used, in which the epoxy resin composition for forming a cured resin layer is coated onto a surface of a vapor-deposited inorganic layer side of a substrate film including the vapor-deposited inorganic layer formed on one side of a base film, such that the cured resin layer has a desired thickness, and next, the epoxy resin composition is cured to form the cured resin layer.

Examples of the coating method that is used for applying the epoxy resin composition include bar coating, Meyer bar coating, air knife coating, gravure coating, reverse gravure coating, micro gravure coating, micro reverse gravure coating, die coating, slot die coating, vacuum die coating, dip coating, spin coating, roll coating, spray coating, and brush coating. Of these, bar coating, roll coating, or spray coating is preferable, and from an industrial viewpoint, gravure coating, reverse gravure coating, micro gravure coating, or micro reverse gravure coating is preferable.

After the epoxy resin composition has been coated, a step of volatilizing the solvent (drying step) is performed as necessary. The conditions in the drying step can be appropriately selected, for example, but drying can be performed at conditions including a drying temperature from 60 to 180°C and a drying time from 5 to 180 seconds.

After the drying step has been performed, the epoxy resin composition is cured to form the cured resin layer. The curing temperature can be selected, for example, in a range from 10 to 140°C and is preferably in a range from 10 to 80°C. Furthermore, the curing time can be selected, for example, in a range from 0.5 to 200 hours and is preferably in a range from 2 to 100 hours.

Characteristics of gas-barrier film

The gas-barrier film of the present invention exhibits an excellent gas-barrier property. For example, the oxygen permeation rate of the gas-barrier film at a temperature of 23°C and a relative humidity of 60% is preferably 0.3 cc·mm/m$^2$·day·atm or less, more preferably 0.2 cc·mm/m$^2$·day·atm or less, even more preferably 0.1 cc·mm/m$^2$·day·atm or less, yet even more preferably 0.05 cc·mm/m$^2$·day·atm or less, and yet even more preferably 0.03 cc·mm/m$^2$·day·atm or less.

Furthermore, the water vapor transmission rate of the gas-barrier film at a temperature of 23°C and a relative humidity of 60% is preferably 0.50 g/m$^2$·day or less, more preferably 0.30 g/m$^2$·day or less, even more preferably 0.15 g/m$^2$·day or less, yet even more preferably 0.10 g/m$^2$·day or less, and yet even more preferably 0.07 g/m$^2$·day or less.

The oxygen permeation rate and water vapor transmission rate of the gas-barrier film are specifically determined through methods described in the examples.

The gas-barrier film of the present invention preferably has a high level of transparency with minimal coloration. Low coloration with a high level of transparency is particularly required when the gas-barrier film of the present invention is used as an optical film for image display devices such as protective films for quantum dots in a quantum dot display; and protective films for organic EL elements in organic EL displays.

From the viewpoint described above, the YI value of the gas-barrier film of the present invention is preferably 2.5 or less and more preferably 2.0 or less. The YI value can be measured in accordance with JIS K7373:2006.

In a case where the gas-barrier film of the present invention is used in an optical film, the haze thereof is preferably 10% or less, more preferably 7% or less, even more preferably 5% or less, and yet even more preferably 3% or less. The haze can be measured in accordance with JIS K7136:2000.

Moreover, in a case where the gas-barrier film of the present invention is used in an optical film, the total light transmittance is preferably 85% or more and more preferably 88% or more. The total light transmittance can be measured in accordance with JIS K7361-1:1997.

Laminate

A laminate of the present invention includes the gas-barrier film of the present invention described above and a thermoplastic resin layer. As an example of a preferable constitution thereof, the thermoplastic resin layer is laminated to a surface of the cured resin layer side of the gas-barrier film of the present invention (a surface (top surface) of the cured resin layer 2 side of the gas-barrier film 100 of FIG. 1), or to the opposite surface thereof (surface (bottom surface) of the base film 11 side of the gas-barrier film 100 of FIG. 1).

The laminate may further include a primer layer, an ink layer, an adhesive layer, a surface protection layer, a vapor deposited layer, or other optional layer laminated between the gas-barrier film and the thermoplastic resin layer. The laminate of the present invention may also include two or more layers each of the gas-barrier film of the present invention and the thermoplastic resin layer.

Use of a thermoplastic resin film as the thermoplastic resin layer is preferable. A transparent plastic film exemplified as a base film that constitutes the substrate film is preferable as the thermoplastic resin film. The surface of the thermoplastic resin film may be subjected to a surface treatment such as a flame treatment and a corona discharge treatment. Furthermore, as the thermoplastic resin film, a film containing, for example, a UV absorber and a coloring agent; and a film including, on the surface, a primer layer, an ink layer, a surface protection layer, a vapor deposited layer, or the like can also be used.

The thickness of the thermoplastic resin layer is preferably from 10 to 300 $\mu$m and is more preferably from 10 to 100 $\mu$m.

Examples of preferable layer constitutions of the laminate of the present invention include a constitution in which the gas-barrier film and the thermoplastic resin film are directly laminated; and a constitution in which the gas-barrier film and the thermoplastic resin film are laminated with an adhesive layer interposed therebetween. Of these, a constitution in which the gas-barrier film and the thermoplastic resin film are laminated with an adhesive layer interposed therebetween is preferable.

In a case where the gas-barrier film and the thermoplastic resin film are laminated with an adhesive layer interposed therebetween, lamination is preferably implemented with the surface of the cured resin layer side of the gas-barrier film and the thermoplastic resin film facing each other. In this case, the layer constitution of the laminate is as illustrated in FIG. 2. FIG. 2 is a cross-sectional schematic view illustrating one embodiment of a laminate of the present invention. In FIG. 2, a laminate 200 is obtained by laminating the gas-barrier film 100 and a thermoplastic resin film 3 with an adhesive layer 4 interposed therebetween, the surface of the cured resin layer 2 side of the gas-barrier film 100 and the thermoplastic resin film 3 facing each other. The laminate 200 includes the base film 11, the vapor-deposited inorganic layer 12, the cured resin layer 2, the adhesive layer 4, and the thermoplastic resin film 3 laminated in this order.

The method for manufacturing the laminate is not particularly limited. Examples of a method for manufacturing a laminate with the gas-barrier film and thermoplastic resin film being laminated directly include a method including coating the epoxy resin composition described above onto the surface of the vapor-deposited inorganic layer side of the substrate film that constitutes the gas-barrier film, immediately followed by laminating the thermoplastic resin film to the coated surface using a nip roller, or the like; subsequently, the epoxy resin composition is cured using the method described above. In this case, the epoxy resin composition constituting the cured resin layer fulfills a role of adhering the substrate film of the gas-barrier film to the thermoplastic resin film.

Examples of a method for manufacturing a laminate for which a gas-barrier film and thermoplastic resin film are laminated with an adhesive layer interposed therebetween include a method including coating an adhesive that constitutes an adhesive layer onto one side of a gas-barrier film manufactured by the method described above or onto one side of a thermoplastic resin film; subsequently, the other film is affixed and laminated thereto.

As the adhesive constituting the adhesive layer, a urethane adhesive, acrylic adhesive, epoxy adhesive, or other known adhesives can be used. Furthermore, the thickness of the adhesive layer is not particularly limited, but from the viewpoint of achieving both adhesion and transparency, the thickness is preferably from 0.1 to 30 $\mu$m, more preferably from 1 to 20 $\mu$m, and even more preferably from 2 to 20 $\mu$m.

## Applications

The gas-barrier film and laminate of the present invention are excellent in a gas-barrier property and bending resistance and are therefore suitable for packaging material applications for protecting, food products, pharmaceuticals, cosmetics, precision electronic components, and the like. When used as a packaging material, the gas-barrier film and laminate of the present invention may be used as they are as a packaging material or may be further laminated with another layer or film and used.

Furthermore, gas-barrier films and laminates with a particularly high water vapor barrier property and transparency are suited, for example, as optical films for image display devices such as protective films for quantum dots in a quantum dot display; and protective films for organic EL elements in organic EL displays. An example of an aspect in which such a protective film is used as a protective film for organic EL elements includes an aspect in which, with respect to an organic EL display device, the gas-barrier film of the present invention is provided on the surface on which the organic EL elements are formed, that is, the surface to be the observer side of the display device.

## Examples

The present invention is described more specifically below through examples. However, the present invention is not limited in any way by these examples.

Measurements and evaluations with respect to the present examples were performed by the following methods.

### Thickness of cured resin layer

The thickness was measured using a multilayer film thickness measuring device ("DC-8200" from Gunze Limited).

### YI

The YI was measured using a device for simultaneously measuring color and turbidity ("COH400" from Nippon Denshoku Industries Co., Ltd.) in accordance with JIS K7373:2006.

### Haze

The haze was measured using a device for simultaneously measuring color and turbidity ("COH400" from Nippon Denshoku Industries Co., Ltd.) in accordance with JIS K7136:2000.

### Total light transmittance

The total light transmittance was measured using a device for simultaneously measuring color and turbidity ("COH400" from Nippon Denshoku Industries Co., Ltd.) in accordance with JIS K7361-1:1997.

### Oxygen permeation rate (cc/m$^2$·day·atm) of film

The oxygen permeation rate was measured under conditions of 23°C and 60% relative humidity using an oxygen permeation rate measuring device ("OX-TRAN2/21" from Modern Controls, Inc.).

### Oxygen permeation coefficient (cc·mm/m$^2$·day·atm) of cured resin layer

An oxygen permeation rate measuring device ("OX-TRAN2/21" from Modern Controls, Inc.) was used, and the epoxy resin composition obtained in each manufacturing example was coated onto a substrate (polyethylene terephthalate (PET) film, thickness: 12 μm) using a bar coater. The epoxy resin composition was heated and dried at 90°C for 10 seconds and then further heated and cured at 40°C for 2 days to produce a laminated film including a substrate and a cured resin layer. The oxygen permeation rates of this laminated film and of the substrate itself were measured by the method described above under conditions of 23°C and 60% relative humidity, and the oxygen permeation coefficient of the cured resin layer was calculated using the following equation.

$$1/R_1 = 1/R_2 + DFT/P$$

where

$R_1$ = oxygen permeation rate (cc/m$^2$·day·atm) of the laminated film
$R_2$ = oxygen permeation rate (cc/m$^2$·day·atm) of the substrate
DFT = thickness (mm) of the cured resin layer
P = oxygen permeation coefficient (cc·mm/m$^2$·day·atm) of the cured resin layer

Oxygen permeation rate (cc/m$^2$·day·atm) of cured resin layer

A value obtained by multiplying the thickness of the cured resin layer by the oxygen permeation coefficient of the cured resin layer was used as the oxygen permeation rate of the cured resin layer.

Water vapor transmission rate (g/m$^2$·day) of film

A water vapor transmission rate measuring device ("PERMATRAN-W 1/50" from MOCON, Inc.) was used. Measurements were continuously taken under conditions of 40°C and 90% relative humidity, and the measurement after 24 hours was used as the water vapor transmission rate.

Film bending test

A Gelbo flex tester (from Rigaku Kogyo Co., Ltd.) was used to apply 360 degree twisting to the films obtained in each example 50 times (bending test implemented 50 times). The oxygen permeation rate and water vapor transmission rate of the films before and after the bending tests were measured by the methods described above.

Lamination strength (g/15 mm)

The lamination strength was measured at a peel rate of 300 mm/min by a T-type peel test in accordance with a method specified by JIS K6854-3:1999.

Production and evaluation of gas-barrier films

Manufacturing Example 1 (manufacturing of epoxy resin curing agent A)

A reaction vessel was charged with 1 mol of meta-xylylenediamine. The temperature was increased to 60°C in a nitrogen stream, and 0.93 mol of methyl acrylate was added dropwise over a period of one hour. The temperature was increased to 165°C while generated methanol was distilled away, and then the temperature was maintained at 165°C for 2.5 hours. An appropriate amount of ethanol was added dropwise over 1.5 hours such that the solid content concentration became 65%, and an epoxy resin curing agent A was obtained.

Manufacturing Example 2 (manufacturing of epoxy resin curing agent B)

A reaction vessel was charged with 1 mol of meta-xylylenediamine. The temperature was increased to 60°C in a nitrogen stream, and 0.88 mol of methyl acrylate was added dropwise over a period of one hour. The temperature was increased to 165°C while generated methanol was distilled away, and then the temperature was maintained at 165°C for 2.5 hours. The temperature was decreased to 100°C, an appropriate amount of ethanol was added such that the solid content concentration became 65 mass%, and the temperature was then decreased to 65°C. To this mixture, 0.27 mol of melted ethylene carbonate was added dropwise over 30 minutes, the temperature was maintained at 65°C for 5 hours, and an epoxy resin curing agent B was obtained.

Manufacturing Example 3 (manufacturing of epoxy resin curing agent C)

A reaction vessel was charged with 1 mol of meta-xylylenediamine and 0.93 mol of methyl crotonate, and the mixture was stirred at 100°C under a nitrogen stream for 4 hours. The temperature was increased to 165°C while generated methanol was distilled away and then the temperature was maintained at 165°C for 2.5 hours. An appropriate amount of ethanol was added dropwise over 1.5 hours such that the solid content concentration became 65 mass%, and an epoxy resin curing agent C was obtained.

Manufacturing Example A (manufacturing of epoxy resin composition A)

Amounts of 9.01 g of methanol, which is a diluting solvent, 1.95 g of ethyl acetate, and 5.25 g of a dispersion liquid ("KOS-A2EOK5-10" from Kawaken Fine Chemicals Co., Ltd., ethanol dispersion liquid, solid content concentration: 10 mass%) of plate-shaped alumina particles coated with an organic-based coating were added and stirred well. Next, 10.92 g of the epoxy resin curing agent A obtained in Manufacturing Example 1 was added and stirred, then 3.40 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition A was produced.

Evaluation of laminated film and cured resin layer

The epoxy resin composition A that was obtained was coated onto a substrate (polyethylene terephthalate (PET) film, thickness: 12 μm) using a bar coater No. 8. The epoxy resin composition was heated and dried at 90°C for 10 seconds and then further heated and cured at 40°C for 2 days to produce a laminated film made from a substrate and a cured resin layer. The thickness of the cured resin layer was 3.1 μm. Using this laminated film, the YI, haze, total light transmittance, and oxygen permeation rate of the laminated film; and the oxygen permeation coefficient and oxygen permeation rate of the cured resin layer were measured by the methods described above. The results are shown in Table 1.

Manufacturing Example B

Amounts of 8.65 g of methanol, which is a diluting solvent, 1.95 g of ethyl acetate, and 5.25 g of a dispersion liquid ("KOS-A2EOK5-10" from Kawaken Fine Chemicals Co., Ltd., ethanol dispersion liquid, solid content concentration: 10 mass%) of plate-shaped alumina particles coated with an organic-based coating were added and stirred well. Next, 11.93 g of the epoxy resin curing agent B obtained in Manufacturing Example 2 was added and stirred, then 2.75 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition B was produced.

Using the obtained epoxy resin composition B, a laminated film was produced and evaluated in a similar manner as in the Manufacturing Example A. The results are shown in Table 1.

Manufacturing Example C

Amounts of 9.79 g of methanol, which is a diluting solvent, 1.95 g of ethyl acetate, and 5.25 g of a dispersion liquid ("KOS-A2EOK5-10" from Kawaken Fine Chemicals Co., Ltd., ethanol dispersion liquid, solid content concentration: 10 mass%) of plate-shaped alumina particles coated with an organic-based coating were added and stirred well. Next, 11.09 g of the epoxy resin curing agent C obtained in Manufacturing Example 3 was added and stirred, then 3.30 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition C was produced.

Using the obtained epoxy resin composition C, a laminated film was produced and evaluated in a similar manner as in the Manufacturing Example A. The results are shown in Table 1.

Manufacturing Example D

Amounts of 9.01 g of methanol, which is a diluting solvent, 1.95 g of ethyl acetate, and 5.25 g of a dispersion liquid ("KOS-TS1EOK5-10" from Kawaken Fine Chemicals Co., Ltd., ethanol dispersion liquid, solid content concentration: 10 mass%) of column-shaped alumina particles coated with an organic-based coating were added and stirred well. Next, 10.92 g of the epoxy resin curing agent A obtained in Manufacturing Example 1 was added and stirred, then 3.40 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition D was produced.

Using the obtained epoxy resin composition D, a laminated film was produced and evaluated in a similar manner as in the Manufacturing Example A. The results are shown in Table 1.

Reference Manufacturing Example E

Amounts of 11.84 g of methanol, which is a diluting solvent, 1.95 g of ethyl acetate, and 2.10 g of a dispersion liquid ("KOS-TS1EOK5-10" from Kawaken Fine Chemicals Co., Ltd., ethanol dispersion liquid, solid content concentration: 10 mass%) of column-shaped alumina particles coated with an organic-based coating were added and stirred well. Next, 10.92 g of the epoxy resin curing agent A obtained in Manufacturing Example 1 were added and stirred, then 3.40 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition E was produced.

Using the obtained epoxy resin composition E, a laminated film was produced and evaluated in a similar manner as in the Manufacturing Example A. The results are shown in Table 1.

Manufacturing Example F

Amounts of 8.09 g of methanol, which is a diluting solvent, 1.95 g of ethyl acetate, and 5.25 g of a dispersion liquid ("KOS-TS1EOK5-10" from Kawaken Fine Chemicals Co., Ltd., ethanol dispersion liquid, solid content concentration: 10 mass%) of column-shaped alumina particles coated with an organic-based coating were added and stirred well. Next, 13.55 g of the epoxy resin curing agent A obtained in Manufacturing Example 1 was added and stirred, then 1.69 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 3.00) was added as an epoxy resin and stirred, and an epoxy resin composition F was produced.

Using the obtained epoxy resin composition F, a laminated film was produced and evaluated in a similar manner as in the Manufacturing Example A. The results are shown in Table 1.

Manufacturing Example G

Amounts of 7.76 g of methanol, which is a diluting solvent, 1.95 g of ethyl acetate, and 5.25 g of a dispersion liquid ("KOS-TS1EOK5-10" from Kawaken Fine Chemicals Co., Ltd., ethanol dispersion liquid, solid content concentration: 10 mass%) of column-shaped alumina particles coated with an organic-based coating were added and stirred well. Next, 14.49 g of the epoxy resin curing agent A obtained in Manufacturing Example 1 was added and stirred, then 1.0 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 5.00) was added as an epoxy resin and stirred, and an epoxy resin composition G was produced.

Using the obtained epoxy resin composition G, a laminated film was produced and evaluated in a similar manner as in the Manufacturing Example A. The results are shown in Table 1.

Manufacturing Example H

Amounts of 8.65 g of methanol, which is a diluting solvent, 1.95 g of ethyl acetate, and 5.25 g of a dispersion liquid ("KOS-TS1EOK5-10" from Kawaken Fine Chemicals Co., Ltd., ethanol dispersion liquid, solid content concentration: 10 mass%) of column-shaped alumina particles coated with an organic-based coating were added and stirred well. Next, 11.93 g of the epoxy resin curing agent B obtained in Manufacturing Example 2 was added and stirred, then 2.75 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition H was produced.

Using the obtained epoxy resin composition H, a laminated film was produced and evaluated in a similar manner as in the Manufacturing Example A. The results are shown in Table 1.

Manufacturing Example I

Amounts of 9.79 g of methanol, which is a diluting solvent, 1.95 g of ethyl acetate, and 5.25 g of a dispersion liquid ("KOS-TS1EOK5-10" from Kawaken Fine Chemicals Co., Ltd., ethanol dispersion liquid, solid content concentration: 10 mass%) of column-shaped alumina particles coated with an organic-based coating were added and stirred well. Next, 11.09 g of the epoxy resin curing agent C obtained in Manufacturing Example 3 was added and stirred, then 3.30

g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition I was produced.

Using the obtained epoxy resin composition I, a laminated film was produced and evaluated in a similar manner as in the Manufacturing Example A. The results are shown in Table 1.

Manufacturing Example J

Amounts of 10.76 g of methanol, which is a diluting solvent, 1.95 g of ethyl acetate, and 3.50 g of a dispersion liquid ("SUNLOVELY LFS HN-050" from AGC Si-Tech Co., Ltd., water dispersion liquid, solid content concentration: 15 mass%, average particle size: 500 nm) of scale-shaped silica particles were added and stirred well. Next, 10.92 g of the epoxy resin curing agent A obtained in Manufacturing Example 1 were added and stirred, then 3.40 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition J was produced.

Using the obtained epoxy resin composition J, a laminated film was produced and evaluated in a similar manner as in the Manufacturing Example A. The results are shown in Table 1.

Manufacturing Example K

Amounts of 10.97 g of methanol, which is a diluting solvent, 1.95 g of ethyl acetate, and 3.28 g of a dispersion liquid ("SUNLOVELY LFS HN-150" from AGC Si-Tech Co., Ltd., water dispersion liquid, solid content concentration: 16 mass%, average particle size: 1500 nm) of scale-shaped silica particles were added and stirred well. Next, 10.92 g of the epoxy resin curing agent A obtained in Manufacturing Example 1 was added and stirred, then 3.40 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition K was produced.

Using the obtained epoxy resin composition K, a laminated film was produced and evaluated in a similar manner as in the Manufacturing Example A. The results are shown in Table 1.

Manufacturing Example L

Plate-shaped lipophilic swellable mica ("Somashif MEE/C25" from Katakura & Co-op Agri Corporation) was dispersed in methanol to prepare a dispersion liquid having a solid content concentration of 5 mass%. To this, 3.76 g of methanol, which is a diluting solvent, and 1.95 g of ethyl acetate were added and stirred well. Next, 10.92 g of the epoxy resin curing agent A obtained in Manufacturing Example 1 was added and stirred, then 3.40 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition L was produced.

Using the obtained epoxy resin composition L, a laminated film was produced and evaluated in a similar manner as in the Manufacturing Example A. The results are shown in Table 1.

Manufacturing Example M

Amounts of 10.76 g of methanol, which is a diluting solvent, 1.95 g of ethyl acetate, and 3.50 g of a dispersion liquid ("IPA-ST-UP" from Nissan Chemical Industries, Ltd., isopropyl alcohol dispersion liquid, solid content concentration: 15 mass%, average particle size: 12 nm) of chain-shaped silica particles were added and stirred well. Next, 10.92 g of the epoxy resin curing agent A obtained in Manufacturing Example 1 was added and stirred, then 3.40 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition M was produced.

Using the obtained epoxy resin composition M, a laminated film was produced and evaluated in a similar manner as in the Manufacturing Example A. The results are shown in Table 1.

Comparative Manufacturing Example A

A comparative epoxy resin composition A was manufactured with the same method as that of Manufacturing

Example A with the exception that a dispersion liquid of plate-shaped alumina particles was not blended thereto, and the addition amount of methanol was changed to 13.73 g. Using the obtained comparative epoxy resin composition A, a laminated film was produced and evaluated in a similar manner as in the Manufacturing Example A. The results are shown in Table 1.

Comparative Manufacturing Example B

Amounts of 12.51 g of methanol, which is a diluting solvent, 1.95 g of ethyl acetate, and 1.75 g of a dispersion liquid (methanol dispersed silica sol, solid content concentration: 30 mass%, average particle size: 12 nm) of spherical silica particles were added and stirred well. Next, 10.92 g of the epoxy resin curing agent A obtained in Manufacturing Example 1 was added and stirred, then 3.40 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and a comparative epoxy resin composition B was produced.

Using the obtained comparative epoxy resin composition B, a laminated film was produced and evaluated in a similar manner as in the Manufacturing Example A. The results are shown in Table 1.

Comparative Manufacturing Example C

Amounts of 13.73 g of methanol, which is a diluting solvent, 1.95 g of ethyl acetate, and 0.525 g of crosslinked acrylic particles ("ENEOS Uni-powder 0220C" from JX Energy Corporation, average particle size: 2 μm), which are true spherical organic particles, were added and stirred well, and the organic particles were dispersed. Next, 10.92 g of the epoxy resin curing agent A obtained in Manufacturing Example 1 was added and stirred, then 3.40 g of an epoxy resin ("TETRAD-X" from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and a comparative epoxy resin composition C was produced.

Using the obtained comparative epoxy resin composition C, a laminated film was produced and evaluated in a similar manner as in the Manufacturing Example A. The results are shown in Table 1.

Reference example

The YI, haze, total light transmittance, and oxygen permeation rate of a PET film alone, which was used as a substrate, were measured. The results are shown in Table 1.

[Table 1-1]

| | Epoxy resin composition | | | | | |
|---|---|---|---|---|---|---|
| | Composition No. | Epoxy resin | Epoxy resin curing agent | (Number of active amine hydrogens in epoxy resin curing agent)/(number of epoxy groups in epoxy resin) | Particles | |
| | | | | | Product name | Type |
| Manufacturing Example A | A | TETRAD-X | Curing agent A | 1.20 | KOS-A2EOK5-10 | Alumina |
| Manufacturing Example B | B | TETRAD-X | Curing agent B | 1.20 | KOS-A2EOK5-10 | Alumina |
| Manufacturing Example C | C | TETRAD-X | Curing agent C | 1.20 | KOS-A2EOK5-10 | Alumina |
| Manufacturing Example D | D | TETRAD-X | Curing agent A | 1.20 | KOS-TS1EOK5-10 | Alumina |
| Reference Manufacturing Example E | E | TETRAD-X | Curing agent A | 1.20 | KOS-TS1EOK5-10 | Alumina |

(continued)

| | Epoxy resin composition | | | | | |
|---|---|---|---|---|---|---|
| | Composition No. | Epoxy resin | Epoxy resin curing agent | (Number of active amine hydrogens in epoxy resin curing agent)/(number of epoxy groups in epoxy resin) | Particles | |
| | | | | | Product name | Type |
| Manufacturing Example F | F | TETRAD-X | Curing agent A | 3.00 | KOS-TS1EOK5-10 | Alumina |
| Manufacturing Example G | G | TETRAD-X | Curing agent A | 5.00 | KOS-TS1EOK5-10 | Alumina |
| Manufacturing Example H | H | TETRAD-X | Curing agent B | 1.20 | KOS-TS1EO K5-10 | Alumina |
| Manufacturing Example I | I | TETRAD-X | Curing agent C | 1.20 | KOS-TS1EOK5-10 | Alumina |
| Manufacturing Example J | J | TETRAD-X | Curing agent A | 1.20 | SUNLOVELY LFS HN-050 | Silica |
| Manufacturing Example K | K | TETRAD-X | Curing agent A | 1.20 | SUNLOVELY LFS HN-150 | Silica |
| Manufacturing Example L | L | TETRAD-X | Curing agent A | 1.20 | Somashif MEE/C25 | Mica |
| Manufacturing Example M | M | TETRAD-X | Curing agent A | 1.20 | IPA-ST-UP | Silica |
| Comparative Manufacturing Example A | Comparison A | TETRAD-X | Curing agent A | - | - | - |
| Comparative Manufacturing Example B | Comparison B | TETRAD-X | Curing agent A | 1.20 | Methanol silica sol | Silica |
| Comparative Manufacturing Example C | Comparison C | TETRAD-X | Curing agent A | 1.20 | ENEOS Uni-powder 0220C | Crosslinked acrylic |
| Reference Example | - | - | - | - | - | - |

[Table 1-II]

| | Epoxy resin composition | | Film evaluation results | | | | | | |
|---|---|---|---|---|---|---|---|---|---|
| | Particles | | | | | | | | |
| | Particle shape | Content | Substrate | Cured resin layer thickness | YI | Haze | Total light transmittance | Laminated film oxygen permeation rate *1) | Cured resin layer oxygen permeation coefficient *2) |
| | | Part by mass *3) | | μm | | % | % | cc/m$^2$· day·atm | cc·mm/m$^2$· day·atm |
| Manufacturing Example A | Plate-shaped | 5 | PET | 3.1 | 1.49 | 2.62 | 89.12 | 15.5 | 0.056 |
| Manufacturing Example B | Plate-shaped | 5 | PET | 2.9 | 1.55 | 2.50 | 89.30 | 16.0 | 0.055 |
| Manufacturing Example C | Plate-shaped | 5 | PET | 3.1 | 1.89 | 2.85 | 89.07 | 21.1 | 0.081 |
| Manufacturing Example D | Column-shaped | 5 | PET | 3.0 | 1.44 | 3.20 | 89.05 | 19.5 | 0.072 |
| Reference Manufacturing Example E | Column-shaped | 2 | PET | 3.1 | 1.45 | 3.01 | 89.10 | 17.5 | 0.065 |
| Manufacturing Example F | Column-shaped | 5 | PET | 3.2 | 1.35 | 3.41 | 89.15 | 21.1 | 0.085 |
| Manufacturing Example G | Column-shaped | 5 | PET | 3.4 | 1.40 | 3.66 | 89.07 | 29.3 | 0.138 |
| Manufacturing Example H | Column-shaped | 5 | PET | 2.9 | 1.50 | 3.05 | 89.10 | 19.9 | 0.071 |
| Manufacturing Example I | Column-shaped | 5 | PET | 3.2 | 1.90 | 3.55 | 89.01 | 25.6 | 0.108 |
| Manufacturing Example J | Scale-shaped | 5 | PET | 3.3 | 1.88 | 7.98 | 89.32 | 3.3 | 0.011 |

(continued)

| | Epoxy resin composition | | Film evaluation results | | | | | | |
|---|---|---|---|---|---|---|---|---|---|
| | Particles | | | | | | | | |
| | Particle shape | Content | Substrate | Cured resin layer thickness | YI | Haze | Total light transmittance | Laminated film oxygen permeation rate *1) | Cured resin layer oxygen permeation coefficient *2) |
| | | Part by mass *3) | | μm | | % | % | cc/m$^2$· day·atm | cc·mm/m$^2$· day·atm |
| Manufacturing Example K | Scale-shaped | 5 | PET | 3.1 | 1.76 | 8.56 | 89.00 | 8.5 | 0.030 |
| Manufacturing Example L | Plate-shaped | 5 | PET | 2.6 | 1.32 | 12.31 | 88.37 | 15.5 | 0.047 |
| Manufacturing Example M | Chain-shaped | 5 | PET | 3.4 | 1.45 | 12.76 | 88.98 | 16.4 | 0.081 |
| Comparative Manufacturing Example A | - | - | PET | 3.0 | 1.45 | 2.85 | 88.98 | 10.3 | 0.034 |
| Comparative Manufacturing Example B | Spherical | 5 | PET | 3.5 | 1.08 | 29.77 | 87.67 | 13.0 | 0.052 |
| Comparative Manufacturing Example C | Spherical | 5 | PET | 2.1 | 1.12 | 16.46 | 88.44 | 28.0 | 0.080 |
| Reference Example | - | - | PET | - | 1.39 | 3.58 | 88.44 | 105 | - |

*1) Oxygen permeation rate of the film made from substrate/cured resin layer
*2) The oxygen permeation coefficient of the cured resin layer alone was calculated from the oxygen permeation rate of the film, provided that the PET (12 μm) oxygen permeation rate = 105 [cc/m$^2$·day·atm].
*3) Content of particles (solid content) per 100 parts by mass of the total amount of the epoxy resin + curing agent

Example 1

A silica vapor-deposited PET film ("Techbarrier L" from Mitsubishi Plastics, Inc., thickness: 12 μm) for which a silicon oxide (silica) was vapor-deposited onto one side of PET was used as the substrate film. The epoxy resin composition A obtained in the Manufacturing Example A was coated on this silica vapor-deposited surface using a bar coater No. 8. The coating was dried for 10 seconds at 90°C, and then further heated and cured for 2 days at 40°C. Thus, a gas-barrier film having a cured resin layer with a thickness of 3.2 μm was obtained.

Using the obtained film, the various evaluations were performed by the methods described above. The results are shown in Table 2.

Examples 2 to 4 and 6 to 13 and Reference Example 5

Gas-barrier films were produced by the same method as in Example 1 with the exception that the epoxy resin compositions that were used and the thickness of the cured resin layer were changed as shown in Table 2, and the various evaluations were performed. The results are shown in Table 2.

Comparative Example 1

Using the silica vapor-deposited PET, which was the substrate film used in Examples 1 to 4 and 6 to 13 and Reference Example 5, the various evaluations were performed by the methods described above. The results are shown in Table 2.

Comparative Examples 2 to 4

Gas-barrier films were produced by the same method as in Example 1 with the exception that the epoxy resin compositions that were used and the thickness of the cured resin layer were changed as shown in Table 2, and the various evaluations were performed. The results are shown in Table 2.

[Table 2-1]

| | Substrate film | Epoxy resin composition No. for cured resin layer formation | Gas-barrier film evaluation results | | | | |
|---|---|---|---|---|---|---|---|
| | | | Cured resin layer thickness | Oxygen permeation rate of cured resin layer | YI | Haze | Total light transmittance |
| | | | μm | $cc/m^2 \cdot day \cdot atm$ | - | % | % |
| Example 1 | Silica vapor-deposited PET | A | 3.2 | 17.5 | 1.63 | 4.39 | 89.38 |
| Example 2 | Silica vapor-deposited PET | B | 3.2 | 17.2 | 1.71 | 4.44 | 89.73 |
| Example 3 | Silica vapor-deposited PET | C | 2.8 | 28.9 | 1.98 | 4.61 | 89.51 |
| Example 4 | Silica vapor-deposited PET | D | 3.1 | 23.2 | 1.90 | 2.96 | 89.12 |

(continued)

| | Substrate film | Epoxy resin composition No. for cured resin layer formation | Gas-barrier film evaluation results | | | | |
|---|---|---|---|---|---|---|---|
| | | | Cured resin layer thickness | Oxygen permeation rate of cured resin layer | YI | Haze | Total light transmittance |
| | | | μm | cc/$m^2$·day·atm | - | % | % |
| Reference Example 5 | Silica vapor-deposited PET | E | 3.2 | 20.3 | 1.80 | 2.76 | 89.56 |
| Example 6 | Silica vapor-deposited PET | F | 2.9 | 29.3 | 2.01 | 3.50 | 89.11 |
| Example 7 | Silica vapor-deposited PET | G | 3.3 | 41.8 | 2.22 | 3.69 | 89.10 |
| Example 8 | Silica vapor-deposited PET | H | 3.2 | 22.2 | 2.00 | 3.15 | 89.21 |
| Example 9 | Silica vapor-deposited PET | I | 3.0 | 36.0 | 2.15 | 3.42 | 88.98 |
| Example 10 | Silica vapor-deposited PET | J | 2.9 | 3.9 | 1.99 | 8.51 | 88.55 |
| Example 11 | Silica vapor-deposited PET | K | 3.3 | 9.1 | 1.85 | 9.18 | 88.30 |
| Example 12 | Silica vapor-deposited PET | L | 2.5 | 18.8 | 1.39 | 9.41 | 89.19 |
| Example 13 | Silica vapor-deposited PET | M | 3.0 | 27.0 | 1.64 | 10.85 | 88.31 |
| Comparative Example 1 | Silica vapor-deposited PET | - | - | - | 1.26 | 4.67 | 90.40 |
| Comparative Example 2 | Silica vapor-deposited PET | Comparison A | 3.0 | 11.3 | 1.57 | 2.69 | 89.42 |

(continued)

| | Substrate film | Epoxy resin composition No. for cured resin layer formation | Gas-barrier film evaluation results | | | | |
|---|---|---|---|---|---|---|---|
| | | | Cured resin layer thickness | Oxygen permeation rate of cured resin layer | YI | Haze | Total light transmittance |
| | | | μm | cc/m$^2$·day·atm | - | % | % |
| Comparative Example 3 | Silica vapor-deposited PET | Comparison B | 3.5 | 14.8 | 1.65 | 31.50 | 88.01 |
| Comparative Example 4 | Silica vapor-deposited PET | Comparison C | 3.0 | 26.7 | 1.41 | 15.78 | 89.25 |

[Table 2-II]

| | Substrate film | Epoxy resin composition No. for cured resin layer formation | Gas-barrier film evaluation results | | | |
|---|---|---|---|---|---|---|
| | | | Oxygen permeation rate cc/m$^2$·day·atm | | Water vapor transmission rate g/m$^2$·day | |
| | | | Number of bending times: 0 | Number of bending times: 50 | Number of bending times: 0 | Number of bending times: 50 |
| Example 1 | Silica vapor-deposited PET | A | 0.012 | 7.3 | 0.045 | 2.1 |
| Example 2 | Silica vapor-deposited PET | B | 0.055 | 7.8 | 0.080 | 2.2 |
| Example 3 | Silica vapor-deposited PET | C | 0.060 | 8.5 | 0.090 | 2.4 |
| Example 4 | Silica vapor-deposited PET | D | 0.015 | 4.6 | 0.035 | 2.6 |
| Reference Example 5 | Silica vapor-deposited PET | E | 0.050 | 7.4 | 0.080 | 2.2 |
| Example 6 | Silica vapor-deposited PET | F | 0.035 | 8.9 | 0.060 | 2.4 |
| Example 7 | Silica vapor-deposited PET | G | 0.050 | 11.2 | 0.080 | 2.6 |
| Example 8 | Silica vapor-deposited PET | H | 0.045 | 6.5 | 0.055 | 2.6 |

(continued)

| | Substrate film | Epoxy resin composition No. for cured resin layer formation | Gas-barrier film evaluation results | | | |
|---|---|---|---|---|---|---|
| | | | Oxygen permeation rate cc/m$^2$·day·atm | | Water vapor transmission rate g/m$^2$·day | |
| | | | Number of bending times: 0 | Number of bending times: 50 | Number of bending times: 0 | Number of bending times: 50 |
| Example 9 | Silica vapor-deposited PET | I | 0.060 | 7.0 | 0.055 | 2.7 |
| Example 10 | Silica vapor-deposited PET | J | 0.002 | 2.0 | 0.060 | 1.5 |
| Example 11 | Silica vapor-deposited PET | K | 0.004 | 12.0 | 0.045 | 2.2 |
| Example 12 | Silica vapor-deposited PET | L | 0.012 | 10.0 | 0.025 | 1.0 |
| Example 13 | Silica vapor-deposited PET | M | 0.012 | 5.0 | 0.110 | 2.2 |
| Comparative Example 1 | Silica vapor-deposited PET | - | 0.650 | 81.0 | 0.300 | 11.0 |
| Comparative Example 2 | Silica vapor-deposited PET | Comparison A | 0.100 | 12.7 | 0.150 | 3.5 |
| Comparative Example 3 | Silica vapor-deposited PET | Comparison B | 0.025 | 4.5 | 0.110 | 3.1 |
| Comparative Example 4 | Silica vapor-deposited PET | Comparison C | 0.230 | 11.1 | 0.028 | 3.5 |

According to the values in Table 1 for the "cured resin layer oxygen permeation coefficient", for the oxygen permeation coefficient for the cured resin layer alone, some Manufacturing Examples have results that are about the same level as those of Comparative Manufacturing Example A, which did not contain particles, and Comparative Manufacturing Examples B and C, for which the particles were not non-spherical inorganic particles.

However, as shown in Table 2, the trend of the barrier property of gas-barrier films, in which the cured resin layer was formed on the surface of the vapor-deposited inorganic layer side of the substrate film, differs from the trend of the barrier property for the cured resin layer by itself. The gas-barrier films of Examples 1 to 4 and 6 to 13 and Reference Example 5 including a prescribed cured resin layer containing non-spherical inorganic particles exhibit good initial barrier properties and good barrier properties after the bending resistance test, and, in particular, exhibited better results for both the initial water vapor barrier properties and water vapor barrier properties after the bending resistance test in comparison to the gas-barrier films of the comparative examples. The gas-barrier films of Examples 1, 4, and 10 to 13 exhibited dramatically improved initial barrier properties, as well as excellent barrier properties after the bending resistance tests. Also, the gas-barrier films of examples 1 to 4 and 6 to 9 and Reference Example 5 exhibited particularly good transparency with low haze values, and the gas-barrier films of examples 10 and 11 exhibited excellent initial oxygen barrier properties.

Example 14

A gas-barrier film was produced by the same method as in Example 1 with the exception that the substrate film that was used was changed to an alumina vapor-deposited PET ("Barrialox 1011HG (non-coated)" from Toray Advanced Film Co., Ltd., thickness: 12 μm), in which aluminum oxide (alumina) was vapor-deposited onto one side of PET, and the exception that the thickness of the cured resin layer was changed as shown in Table 3, and the various evaluations were performed. The results are shown in Table 3.

Example 15

A gas-barrier film was produced by the same method as in Example 1 with the exception that the substrate film that was used was changed to a binary vapor-deposited PET ("Ecosyar VE100" from Toyobo Co., Ltd., thickness: 12 μm), in which silica and alumina were vapor-deposited onto one side of PET, and the exception that the thickness of the cured resin layer was changed as shown in Table 3, and the various evaluations were performed. The results are shown in Table 3.

Example 16

A gas-barrier film was produced by the same method as in Example 14 with the exception that the epoxy resin composition that was used and the thickness of the cured resin layer were changed as shown in Table 3, and the various evaluations were performed. The results are shown in Table 3.

Example 17

A gas-barrier film was produced by the same method as in Example 15 with the exception that the epoxy resin composition that was used and the thickness of the cured resin layer were changed as shown in Table 3, and the various evaluations were performed. The results are shown in Table 3.

Comparative Example 5

The alumina vapor-deposited PET, which was the substrate film used in Examples 14 and 16, was used, and the various evaluations were performed by the methods described above. The results are shown in Table 3.

Comparative Example 6

The binary vapor-deposited PET, which was the substrate film used in Examples 15 and 17, was used, and the various evaluations were performed by the methods described above. The results are shown in Table 3.

[Table 3]

| | Substrate film | Epoxy resin composition No. for cured resin layer formation | Gas-barrier film evaluation results | | | | | | | | |
|---|---|---|---|---|---|---|---|---|---|---|---|
| | | | Cured resin layer thickness | Oxygen permeation rate of cured resin layer | YI | Haze | Total light transmittance | Oxygen permeation rate cc/m$^2$·day·atm | | Water vapor transmission rate g/m$^2$·day | |
| | | | µm | cc/m$^2$·day·atm | - | % | % | Number of bending times: 0 | Number of bending times: 50 | Number of bending times: 0 | Number of bending times: 50 |
| Example 14 | Alumina vapor-deposite d PET | A | 3.1 | 18.0 | 1.11 | 2.23 | 90.25 | 0.250 | 9.1 | 0.500 | 3.2 |
| Example 15 | Binary vapor-deposite d PET | A | 3.1 | 18.0 | 1.20 | 2.85 | 90.03 | 0.300 | 10.5 | 0.500 | 3.5 |
| Example 16 | Alumina vapor-deposite d PET | D | 3.1 | 23.2 | 1.61 | 2.50 | 90.31 | 0.200 | 8.2 | 0.400 | 2.5 |
| Example 17 | Binary vapor-deposite d PET | D | 3.0 | 24.0 | 1.65 | 2.59 | 90.09 | 0.200 | 9.8 | 0.350 | 2.4 |
| Comparative Example 5 | Alumina vapor-deposite d PET | - | - | - | 0.85 | 2.43 | 89.80 | 2.000 | 75.1 | 1.500 | 17.1 |
| Comparative Example 6 | Binary vapor-deposite d PET | - | - | - | 1.01 | 3.00 | 90.20 | 2.200 | 85.0 | 2.100 | 28.5 |

Laminate production and interlayer adhesion evaluation

Manufacturing Example 1' (manufacturing of epoxy resin curing agent A')

A reaction vessel was charged with 1 mol of meta-xylylenediamine. The temperature was increased to 60°C in a nitrogen stream, and 0.93 mol of methyl acrylate was added dropwise over a period of one hour. The temperature was increased to 165°C while generated methanol was distilled away, and then the temperature was maintained at 165°C for 2.5 hours. An appropriate amount of ethanol was added dropwise over 1.5 hours such that the solid content concentration became 62.2 mass%, then 2.8 mass% of 3-aminopropyltriethoxysilane ("KBE-903" from Shin-Etsu Chemical Co., Ltd.), which is a silane coupling agent, was added, and an epoxy resin curing agent A' was obtained.

Manufacturing Example D' (manufacturing of epoxy resin composition D')

Amounts of 9.01 g of methanol, which is a diluting solvent, 1.95 g of ethyl acetate, and 5.25 g of a dispersion liquid ("KOS-TS1EOK5-10" from Kawaken Fine Chemicals Co., Ltd., ethanol dispersion liquid, solid content concentration: 10 mass%) of column-shaped alumina particles coated with an organic-based coating were added and stirred well. Next, 10.92 g of the epoxy resin curing agent A' obtained in Manufacturing Example 1' was added and stirred, then 3.40 g of an epoxy resin (TETRAD-X from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 1.20) was added as an epoxy resin and stirred, and an epoxy resin composition D' was produced.

Manufacturing Example F' (manufacturing of epoxy resin composition F')

Amounts of 9.01 g of methanol, which is a diluting solvent, 1.95 g of ethyl acetate, and 5.25 g of a dispersion liquid ("KOS-TS1EOK5-10" from Kawaken Fine Chemicals Co., Ltd., ethanol dispersion liquid, solid content concentration: 10 mass%) of column-shaped alumina particles coated with an organic-based coating were added and stirred well. Next, 13.55 g of the epoxy resin curing agent A' obtained in Manufacturing Example 1' were added and stirred, then 1.69 g of an epoxy resin (TETRAD-X from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 3.00) was added as an epoxy resin and stirred, and an epoxy resin composition F' was produced.

Manufacturing Example G' (manufacturing of an epoxy resin composition G')

Amounts of 9.01 g of methanol, which is a diluting solvent, 1.95 g of ethyl acetate, and 5.25 g of a dispersion liquid ("KOS-TS1EOK5-10" from Kawaken Fine Chemicals Co., Ltd., ethanol dispersion liquid, solid content concentration: 10 mass%) of column-shaped alumina particles coated with an organic-based coating were added and stirred well. Next, 14.49 g of the epoxy resin curing agent A' obtained in Manufacturing Example 1' were added and stirred, then 1.08 g of an epoxy resin (TETRAD-X from Mitsubishi Gas Chemical Co., Inc.) having a glycidylamino group and derived from meta-xylylenediamine ((number of active amine hydrogens in the epoxy resin curing agent)/(number of epoxy groups in the epoxy resin) = 5.00) was added as an epoxy resin and stirred, and an epoxy resin composition G' was produced.

Example 18

An alumina vapor-deposited PET ("Barrialox 1011HG (non-coated)" from Toray Advanced Film Co., Ltd., thickness: 12 $\mu$m), in which aluminum oxide (alumina) was vapor-deposited onto one side of PET was used as the substrate film. The epoxy resin composition D' obtained in the Manufacturing Example D' was coated on this alumina vapor-deposited surface using a bar coater No. 4. The coating was dried for 30 seconds at 120°C and then further heated and cured for 2 days at 40°C. Thus, a gas-barrier film having a substrate film and a cured resin layer was obtained.

As a urethane-based adhesive, an ethyl acetate solution (solid content concentration: 20 mass%) containing 15 parts by mass of a polyester resin component ("AD-502" from Toyo-Morton, Ltd.) and 1.05 parts by mass of a polyisocyanate component ("CAT-RT85" from Toyo-Morton, Ltd.) was coated onto the cured resin layer of the gas-barrier film that was obtained, using a bar coater No. 12. The coating was dried at 85°C for 10 seconds, after which a 50 $\mu$m thick polypropylene film ("P1146" from Toyobo Co., Ltd.) was affixed thereto using a nip roller, and aged for 2 days at 40°C to obtain a laminate.

Using the obtained laminate, the lamination strength was measured by the above-described method, and the interlayer adhesion was evaluated. The results are shown in Table 4.

Examples 19 and 20

Laminates were produced by the same method as in Example 18 with the exception that the epoxy resin composition that was used was changed as shown in Table 4, and the lamination strength was measured. The results are shown in Table 4.

[Table 4]

| | Substrate film | Epoxy resin composition | | | | | | | | Lamination strength |
|---|---|---|---|---|---|---|---|---|---|---|
| | | Composition No. | Epoxy resin | Epoxy resincuring agent | (Number of active amine hydrogens in epoxy resin curing agent)/ (number of epoxy groups in epoxy resin) | Particles | | | | |
| | | | | | | Product name | Type | Particle shape | Content | |
| | | | | | | | | | Part by mass *1) | g/15 mm |
| Example 18 | Alumina vapor-deposited PET | D' | TETRAD-X | Curing agent A' | 1.20 | KOS-TS1EOK5-10 | Alumina | Column-shaped | 5 | 50 |
| Example 19 | Alumina vapor-deposited PET | F' | TETRAD-X | Curing agent A' | 3.00 | KOS-TS1EOK5-10 | Alumina | Column-shaped | 5 | 170 |
| Example 20 | Alumina vapor-deposited PET | G' | TETRAD-X | Curing agent A' | 5.00 | KOS-TS1EOK5-10 | Alumina | Column-shaped | 5 | 310 |

*1) Content of particles (solid content) per 100 parts by mass of the total amount of the epoxy resin + curing agent

As shown in Table 4, the laminate of the present invention also is excellent in interlayer adhesion. In particular, the laminates of Examples 19 and 20 exhibited high interlayer adhesion.

Industrial Applicability

The gas-barrier film and laminate of the present invention are excellent in a gas-barrier property and bending resistance and are therefore suitable for packaging material applications. Furthermore, the gas-barrier films with a particularly high water vapor barrier property and transparency are suited, for example, as optical films for image display devices such as protective films for quantum dots in a quantum dot display; and protective films for organic EL elements in organic EL displays.

Reference Signs List

100: Gas-barrier film
1: Substrate film
11: Base film
12: Vapor-deposited inorganic layer
2: Cured resin layer
3: Thermoplastic resin film (thermoplastic resin layer)
4: Adhesive layer
200: Laminate

**Claims**

1. A gas-barrier film comprising: a substrate film comprising a vapor-deposited inorganic layer; and a cured resin layer;

   the gas-barrier film comprising the cured resin layer on a surface of the vapor-deposited inorganic layer side of the substrate film;
   the cured resin layer being a cured product of an epoxy resin composition including an epoxy resin, an epoxy resin curing agent, and non-spherical inorganic particles, wherein the non-spherical inorganic particles are plate-shaped, scale-shaped, column-shaped, chain-shaped or fibrous inorganic particles, and the content of the non-spherical inorganic particles in the epoxy resin composition is from 3.0 to 7.0 parts by mass per 100 parts by mass of a total amount of the epoxy resin and the epoxy resin curing agent; and
   the epoxy resin curing agent being a reaction product of the following components (A) and (B):

   (A) at least one selected from the group consisting of meta-xylylenediamine and para-xylylenediamine;
   (B) at least one selected from the group consisting of unsaturated carboxylic acids represented by the following general formula (1) and derivatives thereof,

[Chemical Formula 1]

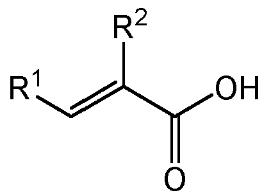

(1)

   where $R^1$ and $R^2$ each independently represent a hydrogen atom, an alkyl group having from 1 to 8 carbons, an aryl group having from 6 to 12 carbons, or an aralkyl group having from 7 to 13 carbons.

2. The gas-barrier film according to claim 1, wherein the epoxy resin includes, as a main component, an epoxy resin derived from meta-xylylenediamine and having a glycidylamino group.

3. The gas-barrier film according to claim 1 or 2, wherein the component (A) is meta-xylylenediamine.

**4.** The gas-barrier film according to any one of claims 1 to 3, wherein the component (B) is at least one selected from the group consisting of acrylic acid, methacrylic acid, crotonic acid, and derivatives thereof.

**5.** The gas-barrier film according to any one of claims 1 to 4, wherein the non-spherical inorganic particles are plate-shaped or scale-shaped inorganic particles.

**6.** The gas-barrier film according to any one of claims 1 to 5, wherein an inorganic substance constituting the non-spherical inorganic particles is at least one selected from the group consisting of silica and alumina.

**7.** The gas-barrier film according to any one of claims 1 to 6, wherein an inorganic substance constituting the vapor-deposited inorganic layer is at least one selected from the group consisting of silicon oxide and aluminum oxide.

**8.** The gas-barrier film according to any one of claims 1 to 7, wherein the epoxy resin curing agent is a reaction product of the component (A), the component (B), and at least one compound selected from the group consisting of the following components (C), (D) and (E):

(C) at least one selected from the group consisting of monovalent carboxylic acids represented by $R^3$-COOH and derivatives thereof, where $R^3$ represents a hydrogen atom, an alkyl group having from 1 to 7 carbons which may have a hydroxyl group, or an aryl group having from 6 to 12 carbons;
(D) a cyclic carbonate; and
(E) a monoepoxy compound having from 2 to 20 carbons.

**9.** The gas-barrier film according to any one of claims 1 to 8, wherein the vapor-deposited inorganic layer and the cured resin layer are adjacent to each other.

**10.** The gas-barrier film according to any one of claims 1 to 9, wherein the substrate film comprises a vapor-deposited inorganic layer on only one surface, and the gas-barrier film comprises only one layer of the cured resin layer.

**11.** The gas-barrier film according to any one of claims 1 to 10, wherein the gas-barrier film is an optical film.

**12.** A laminate comprising: the gas-barrier film described in any one of claims 1 to 11; and a thermoplastic resin layer.

## Patentansprüche

**1.** Gassperrfolie, umfassend: eine Substratfolie, umfassend eine aufgedampfte anorganische Schicht, und eine gehärtete Harzschicht,

wobei die Gassperrfolie die gehärtete Harzschicht auf einer Oberfläche des Substratfilms auf der Seite der aufgedampften anorganischen Schicht umfasst,
die gehärtete Harzschicht ein gehärtes Produkt aus einer Epoxidharzzusammensetzung ist, die ein Epoxidharz, ein Epoxidharzhärtungsmittel und nicht-sphärische anorganische Partikel einschließt, wobei die nicht-sphärischen anorganischen Partikel plattenförmige, schuppenförmige, säulenförmige, kettenförmige oder faserförmige anorganische Partikel sind und der Gehalt der nicht-sphärischen anorganischen Partikel in der Epoxidharzzusammensetzung 3,0 bis 7,0 Masseteile pro 100 Masseteile einer Gesamtmenge des Epoxidharzes und des Epoxidharzhärtungsmittels beträgt und
das Epoxidharzhärtungsmittel ein Reaktionsprodukt aus den folgenden Komponenten (A) und (B) ist:

(A) mindestens eines, ausgewählt aus der Gruppe, bestehend aus meta-Xylylendiamin und para-Xylylendiamin,
(B) mindestens eines, ausgewählt aus der Gruppe, bestehend aus ungesättigten Carbonsäuren, die durch die folgende allgemeine Formel (1) dargestellt sind, und Derivaten davon,

[Chemische Formel 1]

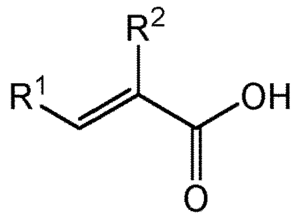

(1)

worin $R^1$ und $R^2$ jeweils unabhängig ein Wasserstoffatom, eine Alkylgruppe mit 1 bis 8 Kohlenstoffatomen, eine Arylgruppe mit 6 bis 12 Kohlenstoffatomen oder eine Aralkylgruppe mit 7 bis 13 Kohlenstoffatomen darstellen.

2. Gassperrfolie gemäß Anspruch 1, wobei das Epoxidharz als eine Hauptkomponente ein Epoxidharz einschließt, das von meta-Xylylendiamin abgeleitet ist und eine Glycidylaminogruppe aufweist.

3. Gassperrfolie gemäß Anspruch 1 oder 2, wobei die Komponente (A) meta-Xylylendiamin ist.

4. Gassperrfolie gemäß einem der Ansprüche 1 bis 3, wobei die Komponente (B) mindestens eine, ausgewählt aus der Gruppe, bestehend aus Acrylsäure, Methacrylsäure, Crotonsäure und Derivaten davon, ist.

5. Gassperrfolie gemäß einem der Ansprüche 1 bis 4, wobei die nicht-sphärischen anorganischen Partikel plattenförmige oder schuppenförmige anorganische Partikel sind.

6. Gassperrfolie gemäß einem der Ansprüche 1 bis 5, wobei eine anorganische Substanz, die die nicht-sphärischen anorganischen Partikel bildet, mindestens eines, ausgewählt aus der Gruppe, bestehend aus Silika und Aluminiumoxid, ist.

7. Gassperrfolie gemäß einem der Ansprüche 1 bis 6, wobei eine anorganische Substanz, die die aufgedampfte anorganische Schicht bildet, mindestens eines, ausgewählt aus der Gruppe, bestehend aus Siliciumoxid und Aluminiumoxid, ist.

8. Gassperrfolie gemäß einem der Ansprüche 1 bis 7, wobei das Epoxidharzhärtungsmittel ein Reaktionsprodukt aus der Komponente (A), der Komponente (B) und mindestens einer Verbindung, ausgewählt aus der Gruppe, bestehend aus den folgenden Komponenten (C), (D) und (E), ist:

(C) mindestens eines, ausgewählt aus der Gruppe, bestehend aus einwertigen Carbonsäure, dargestellt durch $R^3$-COOH und Derivaten davon, worin $R^3$ ein Wasserstoffatom, eine Alkylgruppe mit 1 bis 7 Kohlenstoffen, die eine Hydroxylgruppe aufweisen kann, oder eine Arylgruppe mit 6 bis 12 Kohlenstoffen darstellt,
(D) ein cyclisches Carbonat und
(E) eine Monoepoxyverbindung mit 2 bis 20 Kohlenstoffen.

9. Gassperrfolie gemäß einem der Ansprüche 1 bis 8, wobei die aufgedampfte anorganische Schicht und die gehärtete Harzschicht aneinander angrenzen.

10. Gassperrfolie gemäß einem der Ansprüche 1 bis 9, wobei die Substratfolie eine aufgedampfte anorganische Schicht lediglich auf einer Oberfläche umfasst und die Gassperrfolie lediglich eine Schicht aus der gehärteten Harzschicht umfasst.

11. Gassperrfolie gemäß einem der Ansprüche 1 bis 10, wobei die Gassperrfolie eine optische Folie ist.

12. Laminat, umfassend: die in einem der Ansprüche 1 bis 11 beschriebene Gassperrfolie und eine thermoplastische Harzschicht.

**Revendications**

1. Film formant barrière contre les gaz comprenant : un film formant substrat comprenant une couche inorganique déposée en phase vapeur ; et une couche de résine durcie ;

   le film formant barrière contre les gaz comprenant la couche de résine durcie sur une surface du côté couche inorganique déposée en phase vapeur du film formant substrat ;
   la couche de résine durcie étant un produit durci d'une composition de résine époxyde incluant une résine époxyde, un agent de durcissement de résine époxyde et des particules inorganiques non sphériques, dans lequel les particules inorganiques non sphériques sont des particules inorganiques en forme de plaque, en forme d'écaille, en forme de colonne, en forme de chaîne ou fibreuses, et la teneur des particules inorganiques non sphériques dans la composition de résine époxyde est de 3,0 à 7,0 parties en masse pour 100 parties en masse d'une quantité totale de la résine époxyde et de l'agent de durcissement de résine époxyde ; et
   l'agent de durcissement de résine époxyde étant un produit de réaction des composants (A) et (B) suivants :

   (A) au moins un sélectionné dans le groupe consistant en méta-xylylènediamine et para-xylylènediamine ;
   (B) au moins un sélectionné dans le groupe consistant en des acides carboxyliques insaturés représentés par la formule générale (1) suivante et des dérivés de ceux-ci,

   [Formule chimique 1]

   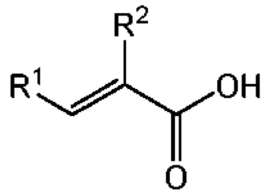

   (1)

   où $R^1$ et $R^2$ représentent chacun indépendamment un atome d'hydrogène, un groupe alkyle présentant de 1 à 8 carbones, un groupe aryle présentant de 6 à 12 carbones ou un groupe aralkyle présentant de 7 à 13 carbones.

2. Film formant barrière contre les gaz selon la revendication 1, dans lequel la résine époxyde inclut, en tant que composant principal, une résine époxyde dérivée de méta-xylylènediamine et présentant un groupe glycidylamino.

3. Film formant barrière contre les gaz selon la revendication 1 ou 2, dans lequel le composant (A) est de la méta-xylylènediamine.

4. Film formant barrière contre les gaz selon l'une quelconque des revendications 1 à 3, dans lequel le composant (B) est au moins un sélectionné dans le groupe consistant en acide acrylique, acide méthacrylique, acide crotonique et des dérivés de ceux-ci.

5. Film formant barrière contre les gaz selon l'une quelconque des revendications 1 à 4, dans lequel les particules inorganiques non sphériques sont des particules inorganiques en forme de plaque ou en forme d'écaille.

6. Film formant barrière contre les gaz selon l'une quelconque des revendications 1 à 5, dans lequel une substance inorganique constituant les particules inorganiques non sphériques est au moins une sélectionnée dans le groupe consistant en silice et alumine.

7. Film formant barrière contre les gaz selon l'une quelconque des revendications 1 à 6, dans lequel une substance inorganique constituant la couche inorganique déposée en phase vapeur est au moins une sélectionnée dans le groupe consistant en oxyde de silicium et oxyde d'aluminium.

8. Film formant barrière contre les gaz selon l'une quelconque des revendications 1 à 7, dans lequel l'agent de durcissement de résine époxyde est un produit de réaction du composant (A), du composant (B) et d'au moins un composé sélectionné dans le groupe consistant en les composants (C), (D) et (E) suivants :

   (C) au moins un sélectionné dans le groupe consistant en des acides carboxyliques monovalents représentés par $R^3$-COOH et des dérivés de ceux-ci, où $R^3$ représente un atome d'hydrogène, un groupe alkyle présentant

1 à 7 carbones qui peuvent présenter un groupe hydroxyle, ou un groupe aryle présentant de 6 à 12 carbones ;
(D) un carbonate cyclique ; et
(E) un composé monoépoxyde présentant de 2 à 20 carbones.

**9.** Film formant barrière contre les gaz selon l'une quelconque des revendications 1 à 8, dans lequel la couche inorganique déposée en phase vapeur et la couche de résine durcie sont adjacentes l'une à l'autre.

**10.** Film formant barrière contre les gaz selon l'une quelconque des revendications 1 à 9, dans lequel le film formant substrat comprend une couche inorganique déposée en phase vapeur sur une seule surface, et le film formant barrière contre les gaz comprend une seule couche de la couche de résine durcie.

**11.** Film formant barrière contre les gaz selon l'une quelconque des revendications 1 à 10, dans lequel le film formant barrière contre les gaz est un film optique.

**12.** Stratifié comprenant: le film formant barrière contre les gaz décrit dans l'une quelconque des revendications 1 à 11 ; et une couche de résine thermoplastique.

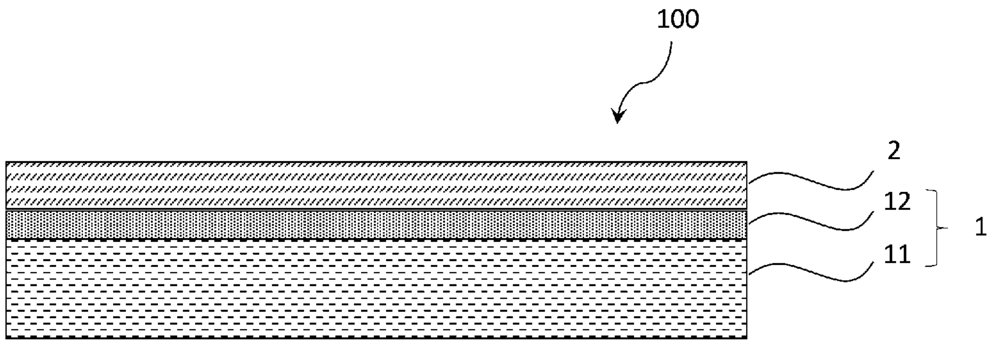


FIG. 1

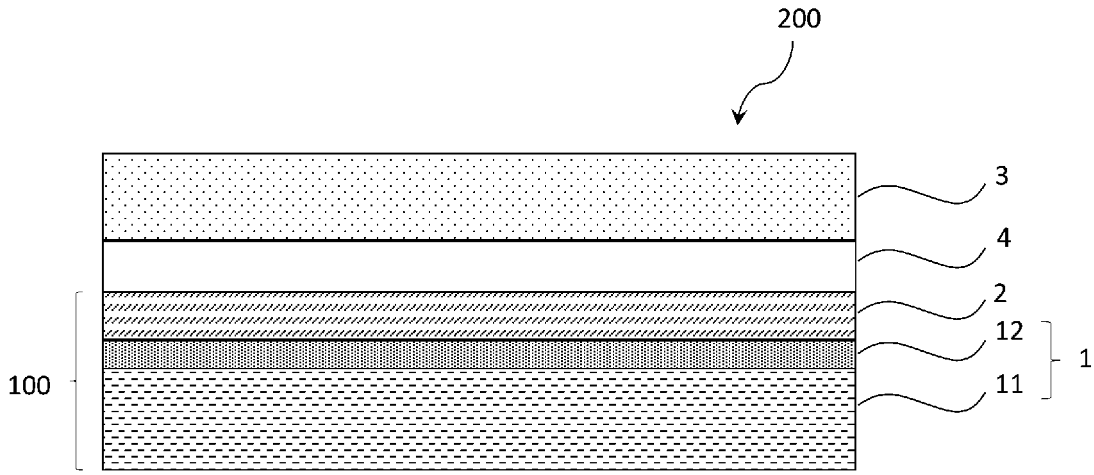


FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003300271 A
- JP 2005028835 A
- JP 2009101684 A
- WO 2013161480 A
- WO 2013161481 A
- JP 2016097596 A
- JP 2010012769 A